(19) **Europäisches Patentamt European Patent Office Office européen des brevets**

(11) **EP 4 277 722 B1**

(12) **FASCICULE DE BREVET EUROPEEN**

(45) Date de publication et mention
de la délivrance du brevet:
**05.03.2025   Bulletin 2025/10**

(21) Numéro de dépôt: **22701419.8**

(22) Date de dépôt: **06.01.2022**

(51) Classification Internationale des Brevets (IPC):
***B01D 53/04*** *(2006.01)*

(52) Classification Coopérative des Brevets (CPC):
**B01D 53/0454;** B01D 2253/102; B01D 2257/708;
B01D 2258/06; B01D 2259/4541

(86) Numéro de dépôt international:
**PCT/IB2022/050088**

(87) Numéro de publication internationale:
**WO 2022/153147 (21.07.2022 Gazette 2022/29)**

(54) **PROCÉDÉ NON DESTRUCTIF DE DETERMINATION DE LA CAPACITÉ RESIDUELLE D'ARRÊT D'UN FILTRE ADSORBANT ET BANC D'ESSAI ASSOCIÉ**

ZERSTÖRUNGSFREIES VERFAHREN ZUR BESTIMMUNG DER RESTHALTEKAPAZITÄT EINES ADSORPTIONSFILTERS UND ZUGEHÖRIGER PRÜFSTAND

NON-DESTRUCTIVE METHOD FOR DETERMINING THE RESIDUAL HOLDING CAPACITY OF AN ADSORBENT FILTER AND ASSOCIATED TEST BENCH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.01.2021   FR 2100355**

(43) Date de publication de la demande:
**22.11.2023   Bulletin 2023/47**

(73) Titulaire: **Etat Français représenté par le Délégué Général
pour L'Armement
75509 Paris Cedex 15 (FR)**

(72) Inventeurs:
• CHANDESRIS, Benoît
  91370 Verrières-Le-Buisson (FR)
• SOUBEYRAND-LENOIR, Estelle
  91190 Gif-sur-Yvette (FR)
• SCHIAVO, Alexandre
  92400 Courbevoie (FR)
• SOLER, Patricia
  91760 Itteville (FR)
• KERVELLA, Maxime
  91290 Arpajon (FR)

(74) Mandataire: **Cabinet Chaillot
16/20, avenue de l'Agent Sarre
B.P. 74
92703 Colombes Cedex (FR)**

(56) Documents cités:
**EP-A2- 0 903 479       WO-A1-2009/055511
US-A1- 2004 250 532       US-B1- 8 205 483**

• WAHIDUZZAMAN ET AL: "Processing and Performance of MOF (Metal Organic Framework)-Loaded PAN Nanofibrous Membrane for CO2Adsorption", JOURNAL OF MATERIALS ENGINEERING AND PERFORMANCE, ASM INTERNATIONAL, MATERIALS PARK, OH, US, vol. 25, no. 4, 22 February 2016 (2016-02-22), pages 1276 - 1283, XP035945473, ISSN: 1059-9495, [retrieved on 20160222], DOI: 10.1007/S11665-016-1966-Y
• PRAVEEN BOLLINI ET AL: "Dynamics of CO 2 Adsorption on Amine Adsorbents. 1. Impact of Heat Effects", INDUSTRIAL & ENGINEERING CHEMISTRY RESEARCH, vol. 51, no. 46, 6 November 2012 (2012-11-06), pages 15145 - 15152, XP055675505, ISSN: 0888-5885, DOI: 10.1021/ie301790a

• PRAVEEN BOLLINI ET AL: "Supporting Information for: Dynamics of CO 2 Adsorption on Amine Adsorbents. 1. Assessment of Heat Effects", 6 November 2012 (2012-11-06), pages S1 - S6, XP055675755, Retrieved from the Internet <URL:https://pubs.acs.org/doi/10.1021/ie301790a> [retrieved on 20200311]

**Description**

La présente invention concerne le domaine de la filtration par adsorbant, et porte en particulier sur un procédé non destructif de détermination de la capacité résiduelle d'arrêt d'un filtre adsorbant, et sur un banc d'essai configuré pour mettre en œuvre ledit procédé non destructif.

Un filtre adsorbant est un dispositif à base de matériau adsorbant (charbon actif, zéolite, Metal Organic Framework, etc.) permettant d'épurer un fluide (air, eau, etc.) de produits contaminants. Par exemple : filtre de masque de protection respiratoire à base de charbon actif, filtre à base de charbon actif, etc.

En préambule, certains termes techniques vont être définis pour être ensuite utilisés par la suite.

Un **gaz cible** est un gaz ou une vapeur que l'on cherche à supprimer d'un flux d'air, son arrêt par le lit d'adsorbant du filtre adsorbant faisant partie de l'objectif premier de l'installation d'un filtre adsorbant. A titre d'exemple, ce gaz cible peut être un polluant atmosphérique ou un agent toxique volatil que l'on retire de l'air ambiant par adsorption dans le lit de charbon d'un filtre de masque de protection respiratoire afin de protéger la respiration humaine.

Un **gaz porteur** est un gaz pur ou une vapeur pure ou un mélange de gaz ou vapeurs circulant en continu à travers le filtre adsorbant. A titre d'exemple, ce gaz porteur est souvent de l'air à pression atmosphérique pour les applications d'épuration de l'air. Le gaz porteur n'est pas arrêté par le filtre adsorbant.

Un **gaz sonde** est un gaz envoyé ponctuellement afin de déterminer le taux de saturation du lit d'adsorbant du filtre. Le gaz sonde n'est pas arrêté par le filtre adsorbant.

Un **gaz parasite** est un gaz pur ou une vapeur pure ou un mélange de gaz ou vapeurs arrêté par un filtre adsorbant, mais que le filtre n'a pas vocation à arrêter (par exemple des rejets d'échappements de véhicules pour un filtre militaire dont la vocation est d'arrêter les produits toxiques de guerre).

Le **lit d'adsorbant** d'un filtre adsorbant est un volume de matériau adsorbant traversé par un flux de gaz porteur (par exemple, de l'air), ayant des propriétés d'arrêt de gaz cibles et de gaz parasites (par exemple, des polluants atmosphériques) autres que le gaz porteur et le gaz sonde. Les matériaux constitutifs du lit d'adsorbant peuvent, par exemple, être des charbons actifs (sous forme de grains, billes, poudres, pellets, fibres ou condensés), des zéolites et leurs dérivés zéolitiques ZIFs (du terme anglo-saxon « Zeolitic Imidazole Framework »), des réseaux organométalliques de type MOFs ou IRMOFs (respectivement des termes anglo-saxons « Metal-Organic Framework (MOF) » et « Isoreticular Metal Organic Framework (IRMOF)), les solides poreux cristallins organiques tels que les COFs (du terme anglo-saxon « Covalent Organic Framework »), les alumino-silicates, les silices mésoporeuses, des membranes, tamis et matériaux composites de filtration/adsorption, tels que des fibres de verre, des esters de cellulose, des fibres de cellulose, des particules de kieselguhr ou perlite, les terres diatomées, du nylon-polyamide, des membranes organiques en polymères (par exemple le poly-fluorure de vinylidène (PVDF), le polyéther sulfone (PES)), des membranes inorganiques (en céramiques ou acier inoxydable), des résines, etc.

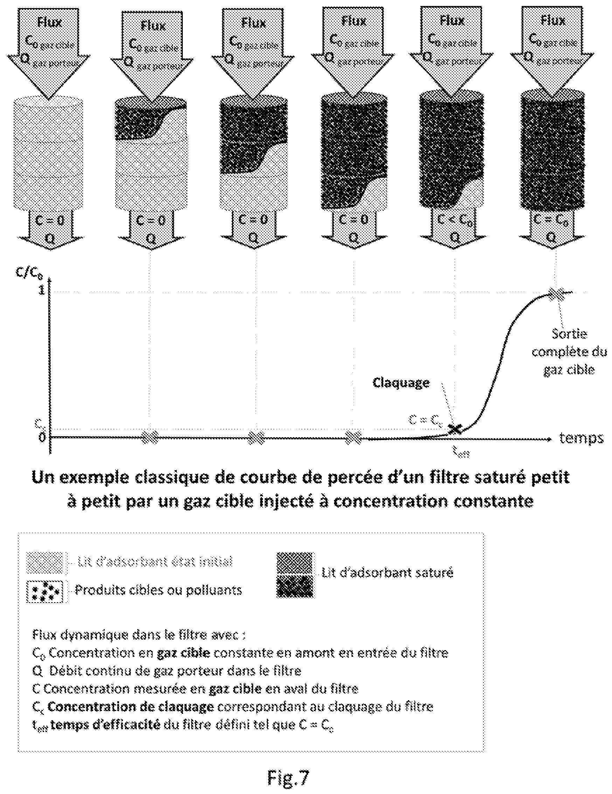

La **méthode de mesure de courbe de percée** (appelée percée par simplification - « breakthrough » en anglais), illustrée en [Fig.7], est une méthode de mesure destructive de la capacité d'arrêt d'un filtre, consistant en l'injection en continu d'un gaz cible dans un gaz porteur en amont du filtre (par exemple du cyclohexane dans de l'air) à une concentration constante pendant toute l'expérience. La mesure de la concentration en ce gaz cible en aval du filtre en fonction du temps montre la progression de la saturation des couches d'adsorbant du filtre. L'expérience se prolonge jusqu'à obtenir une concentration en gaz cible en aval du filtre égale à la concentration injectée en amont du filtre. A l'issue de cette mesure, le filtre est inopérant, rendant la méthode destructive. Par exemple, le document intitulé "Removal of volatile organic compound by activated carbon fiber" (Elimination de composé organique volatil par charbon actif, Das et al., Carbon, volume 42, Issue 14, 2004, p 2949-2962, décrit un dispositif permettant des mesures de percée (« breakthrough » en anglais) au travers d'un lit d'adsorbant.

La **concentration de claquage** (désignée « end life » en anglais) est une valeur de concentration en gaz cible en aval du filtre définie selon des critères toxicologiques (ex : seul toxicologique) ou analytiques (ex : limite de détection d'un détecteur). La concentration en gaz cible injectée dans une mesure de percée est toujours plus élevée que cette concentration de claquage. A titre d'exemple, la concentration de claquage d'un filtre de masque de protection respiratoire pour un agent toxique tel que du dichlore ($Cl_2$) est atteinte lorsque la concentration en dichlore en aval du filtre atteint le début du seuil toxicologique du chlore, soit 0,5 ppm, le porteur du masque de protection respiratoire à ce stade risquant d'avoir les premiers effets sur sa santé tels qu'une irritation modérée au niveau des yeux, larmoiement, blépharospasme, sensation de brûlure au niveau du nez, de la gorge, éternuement, toux.

Le **temps d'efficacité** correspond, dans une mesure de percée, à la durée mesurée entre le début de l'injection du gaz cible à concentration constante et le temps mesuré pour atteindre la concentration de claquage (exemple : seuil toxicologique du gaz cible, limite de détection d'un détecteur, etc.) en gaz cible en aval du filtre.

La **capacité d'arrêt d'un filtre** est définie, pour une température, une hygrométrie et une concentration en gaz cible données, comme la masse maximale de gaz cible, retenue par le filtre, atteinte lors du claquage.

La **capacité résiduelle d'arrêt** d'un filtre est la masse de gaz cible pouvant encore être retenue par un filtre adsorbant à un instant donné, avant que celui-ci n'ait atteint sa capacité d'arrêt.

Le **taux de saturation d'un filtre** est le rapport entre la quantité en gaz cible arrêtée par le filtre à un instant donné et la capacité totale d'arrêt du filtre.

En conséquence, comme la capacité d'arrêt du filtre vaut la somme de la quantité de gaz cible arrêtée et de la capacité résiduelle d'arrêt du filtre, le taux de saturation peut être défini comme :

[Math.1]

$$Taux\ de\ saturation\ du\ filtre = 100\% - \frac{Capacité\ résiduelle\ d'arrêt\ du\ filtre}{Capacité\ d'arrêt\ du\ filtre}$$

Le **pic de concentration** est la concentration la plus élevée d'un composant donné qui a été mesurée avec un analyseur continu pendant une période d'échantillonnage spécifiée. [IUPAC. Compendium of Chemical Terminology, 2nd ed. (the "Gold Book"). Compiled by A. D. McNaught and A. Wilkinson. Blackwell Scientific Publications, Oxford (1997). Online version (2019-) created by S. J. Chalk. ISBN 0-9678550-9-8. https://doi.org/10.1351/goldbook.].

Dans le domaine de la filtration de l'air, l'épuration d'un flux d'air par un filtre adsorbant présente de nombreux avantages :

-     c'est un procédé couramment utilisé, bien connu et maîtrisé industriellement ;
-     c'est un procédé relativement peu coûteux, utilisé dans de nombreux secteurs : protection des travailleurs via des cartouches filtrantes avec charbon actif sur masques de protection respiratoires, domaine militaire pour l'épuration de l'air, secteur aéronautique pour l'épuration de l'air cabine, etc.

A ce titre, une littérature variée en précise les différentes applications.

Généralement, la fonction d'arrêt d'un filtre adsorbant n'est pas spécifique d'un polluant donné. Ainsi, par exemple, un filtre adsorbant ayant pour fonction l'arrêt de produits toxiques de guerre dans un contexte militaire, arrête également des polluants, tels que les rejets d'échappements de véhicules, qu'on appellera « gaz parasite » (voir définition ci-dessus). Ces gaz parasites, arrêtés par le filtre, entraînent une diminution de la capacité d'arrêt du filtre adsorbant vis-à-vis du (ou des) gaz cible(s), et ce même si aucune exposition à un gaz cible (notamment toxique) n'a eu lieu. Il est ainsi possible qu'un filtre adsorbant perde toute efficacité d'arrêt vis-à-vis du (ou des) gaz cible(s) du fait des gaz parasites.

L'un des inconvénients actuels des filtres adsorbants est qu'il n'existe pas de méthode non destructive efficace qui permette de déterminer la capacité résiduelle d'arrêt du filtre adsorbant.

Historiquement, faute de dispositif non destructif, une mesure de la capacité résiduelle d'arrêt d'un filtre est parfois réalisée par l'utilisation de la méthode de percée (voir définition ci-dessus) après utilisation de ce filtre adsorbant. On injecte ainsi dans le gaz porteur un gaz cible, en amont du filtre à tester, pour déterminer la capacité résiduelle d'arrêt du filtre. Cette injection se fait à concentration constante, jusqu'à ce que la concentration en gaz cible dépasse une certaine valeur en aval du filtre adsorbant. Le temps d'efficacité (voir définition ci-dessus), proportionnel à une masse de gaz cible arrêtée, est alors comparé au temps d'efficacité obtenu sur un autre filtre neuf du même modèle avec les mêmes caractéristiques, lui-même proportionnel à une masse de gaz cible arrêté. Ceci permet alors de déterminer le taux de saturation (voir définition ci-dessus) du filtre adsorbant. De nombreux brevets et publications utilisent cette méthode (« Removal of volatil organic compound by activated carbon fiber », Elimination de composé organique volatil par fibre de carbone activée, Das et al., Carbon, volume 42, Issue 14, 2004, p 2949-2962).

Cette méthode présente de nombreux inconvénients :

-     on ne connaît la capacité résiduelle d'arrêt du filtre qu'après son utilisation : si le filtre n'était plus efficace, on apprend trop tard qu'il faut changer le filtre ;
-     la méthode est destructive : si le filtre était encore efficace, on a détruit la capacité résiduelle d'arrêt pour réaliser le test par méthode de percée ;
-     la méthode est chère, complexe à mettre en œuvre et utilise des produits cibles généralement toxiques - même si l'utilisation de gaz cibles substituts ou simulants (« surrogate » en anglais) permettent des essais en limitant les risques, mais qui n'en demeurent pas moins destructifs.

Des méthodes alternatives destructives existent, comme l'utilisation d'un filtre homothétique ou sacrificiel sur la ligne de filtration. Ceci revient à mettre en dérivation du filtre principal un filtre plus petit - appelé « filtre homothétique » ou « filtre sacrificiel », traversé par un débit plus petit que sur le filtre principal, et dont le taux de saturation va rester équivalent à celui du filtre principal. Plutôt que de faire un essai destructif de percée sur le grand filtre pour mesurer la capacité résiduelle d'arrêt, on mesure la capacité résiduelle d'arrêt sur le filtre homothétique, toujours par la méthode de percée.

Ceci est décrit par exemple dans la publication de la demande internationale WO2009/055511A1. Cette méthode reste destructive, et présente les inconvénients suivants :

- on doit faire l'hypothèse que le filtre homothétique permet de transposer de façon précise le taux de saturation du filtre principal, ce qui n'est jamais exactement le cas ;
- la méthode reste destructive pour le filtre homothétique qui doit ainsi être changé à chaque mesure de percée réalisée ;
- la méthode reste coûteuse et nécessite la mesure régulière de l'efficacité résiduelle du filtre homothétique.

Un indicateur fiable et non destructif du taux de saturation d'un filtre adsorbant serait pertinent, tant du point de vue sécurité de fonctionnement que du point de vue économique.

Depuis 1925, plusieurs recherches ont été menées pour déterminer la capacité résiduelle d'arrêt d'un filtre adsorbant de façon non destructive. Les méthodes envisagées lors de ces recherches ont été les suivantes comme le document « End of Service Life Indicator (ESLI) for Respirator Cartridges. Part I: Literature Review » (Indicateur de fin de service pour cartouche de masques de protection respiratoire. Partie 1 : Etat de l'art), 2005, Georges Favas, Australian Government, Department of Defence (disponible en libre accès sur internet) l'explique :

- systèmes passifs :
- méthode basée sur la réaction du gaz cible avec un réactif (par exemple, réaction colorimétrique) : un indicateur à l'intérieur du matériau adsorbant du filtre permet de mettre en évidence que le produit contaminant a atteint un certain niveau dans le matériau adsorbant ;
- méthode basée sur la réaction d'un autre produit de l'air avec un réactif, en particulier par détection de la présence d'eau en aval du filtre ;
- méthode basée sur le relargage d'une substance odorante lorsque le produit à filtrer pénètre jusqu'à un certain niveau dans le matériau adsorbant ;
- systèmes actifs :
- méthode mécanique, liée à la sensibilité d'un élément à la présence du produit à filtrer (par exemple, cire qui change de dureté en présence du gaz cible) ;
- méthode électrique, basée sur le changement d'impédance d'un matériau donné (par exemple, polymère) en présence du gaz cible ;
- méthode thermique : la chaleur dégagée par l'adsorption est mesurée ou encore fait fondre un matériau (par exemple, cire) ; et
- détecteur actif (par exemple, détecteur à ionisation de flamme (FID)) qui détecte la présence du gaz cible à un niveau donné du matériau adsorbant du filtre.

En l'état actuel, aucune de ces méthodes n'est concrètement utilisée, hormis quelques méthodes colorimétriques, lesquelles présentent le défaut majeur d'être spécifiques d'un composé donné. Ainsi, une saturation partielle ou totale du filtre adsorbant par un gaz parasite, empêchant le filtre adsorbant d'absorber le gaz cible, ne peut pas être détectée si l'indicateur colorimétrique n'est pas sensible à ce gaz parasite.

La plupart du temps, les méthodes précitées sont inefficaces car :

- trop spécifiques du gaz cible (par exemple, colorimétrie) ;
- trop peu sensibles (par exemple, méthode de relargage d'une substance odorante, méthode par certains détecteurs actifs) ;
- souffrant de faux positifs ou de faux négatifs (par exemple, méthode liée à une variation de température) ;
- temps de réponse trop élevé ;
- biaisées dans leur principe même (par exemple, méthode par détection de présence d'eau : en effet, même si de l'eau peut traverser un filtre adsorbant (fin de l'efficacité du filtre vis-à-vis de l'eau), une longue efficacité vis-à-vis du gaz cible peut perdurer).

Par conséquent, en l'état actuel, seule la méthode consistant à placer un détecteur du gaz cible en aval du filtre adsorbant est réellement utilisée. En aval de ce détecteur, un deuxième filtre peut permettre de se prémunir de la saturation rapide du premier filtre. Cette technique nécessite donc l'équivalent de deux filtres, et est spécifique des familles chimiques que le détecteur est en mesure d'analyser.

La présente invention vise à résoudre les inconvénients de l'état antérieur de la technique.

La présente invention a donc pour objet un procédé non destructif de détermination de la capacité résiduelle d'arrêt d'un filtre adsorbant de type donné, le filtre adsorbant étant apte à adsorber un gaz cible, caractérisé par le fait que le procédé comprend les étapes (a) à (f) définies dans la revendication 1 annexée.

Par aval et amont du filtre, on entend par rapport au sens de circulation du gaz cible, porteur ou sonde à travers le filtre adsorbant. L'aval correspond donc à la sortie du filtre adsorbant, l'amont à l'entrée du filtre adsorbant.

Les température, pression et hygrométrie de fonctionnement n'ont pas besoin d'être contrôlées, elles doivent juste pouvoir être mesurées et restent identiques aux étapes (b), (c) et (d).

L'étape (c) pour le filtre de référence et l'étape (d) pour le filtre sous test sont réalisées séquentiellement.

Le gaz sonde et le gaz porteur, contrairement au gaz cible, ne peuvent pas être fixés durablement sur l'adsorbant du filtre.

Au moins l'un du gaz sonde et du gaz porteur doit pouvoir être détecté en aval du filtre adsorbant : si le gaz sonde est détectable, on pourra détecter directement l'évolution de sa concentration en aval du filtre adsorbant. Si le gaz porteur est détectable, on pourra déduire de l'évolution de sa concentration en aval du filtre adsorbant, en connaissant les paramètres d'injection, l'évolution de la concentration en gaz sonde en aval du filtre adsorbant.

Le gaz porteur aura avantageusement une concentration de ses composants stables au cours du temps. L'injection de gaz sonde provoquera une brusque variation de la concentration de l'un au moins des composés du gaz sonde et du gaz porteur lors de la durée d'injection.

Le filtre de référence et le filtre sous test, du même type, ont les mêmes caractéristiques et donc la même capacité d'arrêt. La capacité d'arrêt $m_a$ du filtre de référence peut s'exprimer comme la concentration massique en gaz cible envoyée pendant la durée d'un test de claquage multipliée par le débit qui traverse le filtre multiplié par le temps d'efficacité.

Selon un mode de réalisation de l'invention, on mesure en continu avec un détecteur adapté au gaz sonde la concentration en gaz sonde en aval du filtre en cours du temps, avec la meilleure fréquence d'acquisition possible. Il est également possible de mesurer la concentration en gaz porteur et d'en déduire la concentration en gaz sonde. A titre d'exemple, si l'on cherche à mesurer la capacité résiduelle d'arrêt selon le procédé de l'invention pour un filtre adsorbant avec le $CO_2$ comme gaz sonde et l'air comme gaz porteur, il serait possible d'injecter une variation brusque d'azote dans le flux traversant le filtre sous test et de mesurer en sortie du filtre adsorbant la concentration en azote pour déduire, de l'évolution de la concentration en azote au cours du temps, l'évolution de la concentration en $CO_2$ (la concentration en $CO_2$ dans l'air étant connue) au cours du temps et donc le taux de saturation du filtre. De même, la concentration en $CO_2$ dans l'air comme gaz porteur pourra être suivie, l'injection d'azote servant à créer la variation significative de concentration en $CO_2$ par dilution. A ce titre, un composé donné, tel du $CO_2$, du gaz porteur peut être considéré comme gaz sonde, tant que l'injection du gaz sonde, tel de l'azote, créée une variation significative de la concentration dudit composé du gaz porteur. A titre d'exemple non limitatif, le détecteur utilisé sera un détecteur infrarouge à transformée de Fourier ou un détecteur infrarouge de type détecteur infrarouge de type dispersif (NDIR). Ces mesures seront enregistrées pour pouvoir être exploitées dans les étapes suivantes ((e)) et (f)). Cette étape a une durée dépendant de la nature du gaz sonde, de la variation brusque en gaz sonde envoyé dans le flux d'air amont, de l'adsorbant, de la saturation de l'adsorbant, de la température et de l'hygrométrie relative. Cette étape pourra se terminer automatiquement lorsque la dérivée temporelle de la concentration en gaz sonde en aval du filtre, prise en valeur absolue, sera inférieure à 10 ppbv/s.

Selon l'invention, on analyse mathématiquement la courbe de concentration en gaz sonde en aval du filtre en fonction du temps. Une quantité numérique appelée par la suite « signature de la courbe » est alors extraite. Cette signature peut être :

- lorsque la variation brusque est un pic de concentration, la valeur du pic de concentration en gaz sonde mesuré en aval du filtre pendant la durée de l'expérience (concentration) ;
- lorsque la variation brusque est un pic de concentration (selon les définitions en début de document), la largeur du pic de concentration en gaz sonde pendant la durée de l'opération (durée) ;
- la durée entre le début de l'injection de gaz sonde en amont du filtre et le temps de début de détection de gaz sonde en aval du filtre (durée) ;
- les paramètres issus d'une modélisation mathématique de la courbe de concentration en gaz sonde en aval du filtre, avec plusieurs paramètres de modélisation. On peut citer par exemple une modélisation à cinq paramètres $x_1$, $x_2$, $x_3$, $x_4$ et $x_5$, selon l'équation suivante :

[Math.2]

$$y = x_4 + \frac{1}{2} \cdot \frac{x_5}{x_3} \times \exp\left(\frac{1}{2} \cdot \left(\frac{x_2}{x_3}\right)^2 - \frac{t - x_1}{x_3}\right) \times \text{erfc}\left(\frac{\frac{x_2}{x_3} - \frac{t - x_1}{x_2}}{\sqrt{2}}\right)$$

$$\text{erfc}(x) = \frac{5}{\sqrt{\pi}} \int_x^\infty e^{-t^2} dt$$

Dans cette équation, y représente la concentration en gaz sonde en aval du filtre, t représente le temps, et les paramètres $x_1$, $x_2$, $x_3$, $x_4$ et $x_5$ sont déterminés par un logiciel comme étant les paramètres qui permettent d'obtenir une courbe théorique selon cette équation qui se rapproche le plus de la courbe de concentration en gaz sonde mesurée expérimentalement en aval du filtre de référence ou du filtre sous test.

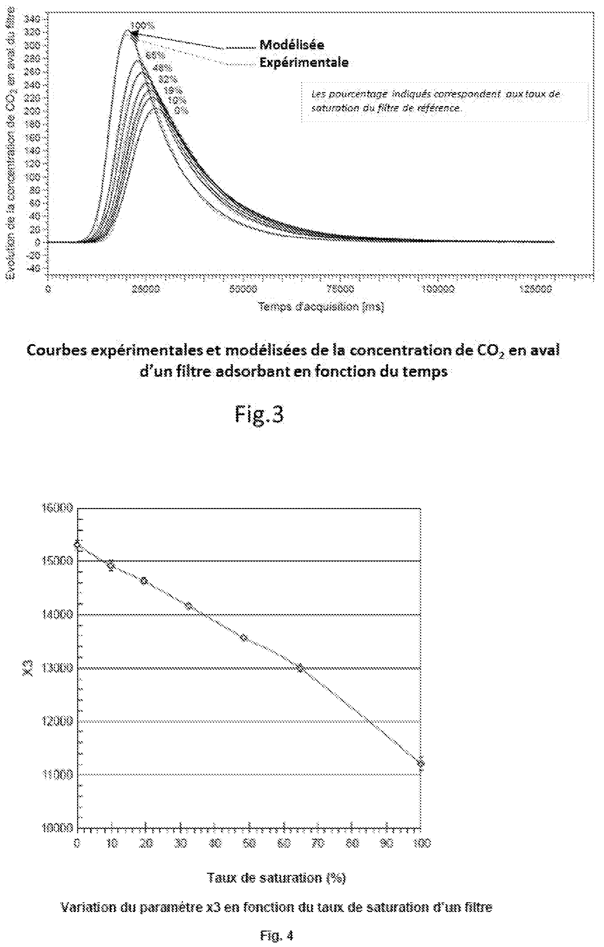

L'évolution de la courbe de concentration en gaz sonde mesurée en aval du filtre de référence ou du filtre sous test est ainsi entrée sous la forme d'une suite de mesures dans un logiciel qui modélisera cette évolution sous la forme d'une courbe selon l'équation ci-dessus, et calculera automatiquement les paramètres $x_1$, $x_2$, $x_3$, $x_4$ et $x_5$. Un algorithme classique de l'état de l'art de minimisation de la distance entre la courbe expérimentale et la courbe théorique permet d'ajuster numériquement les paramètres (voir courbes expérimentales et courbes d'approximation sur la [Fig.3]). L'utilisation du paramètre $x_3$, par exemple, permet alors de donner une signature spécifique à la courbe de concentration en gaz sonde au cours du temps. A titre d'exemple, la [Fig.4] présente les données expérimentales obtenues qui permettent de lier le paramètre $x_3$ obtenu en [Fig.3] au taux de saturation du filtre. Une signature de la courbe de concentration peut être constituée par l'un parmi un paramètre ou une combinaison de paramètres du modèle mathématique qui, sur la plage de taux de saturation du filtre de référence, a une variation monotone et une dérivée en fonction du taux de saturation maximale, et la comparaison de la signature de la courbe de concentration entre le filtre sous test et le filtre de référence.

Selon un mode de réalisation de l'invention, on compare la signature obtenue à des abaques réalisés au préalable avec les mesures réalisées à l'étape (c) sur le filtre de référence. Ces abaques devront prendre en compte comme paramètres l'hygrométrie et la température des gaz sonde et porteur, ainsi que le taux de saturation du filtre. La forme de la courbe de concentration en gaz sonde en fonction du temps en aval du filtre adsorbant est dépendante du taux de saturation du filtre adsorbant. Ainsi, la valeur de la signature de la courbe de concentration en gaz sonde en fonction du temps, en aval du filtre, permet de déterminer le taux de saturation du filtre adsorbant testé, et donc la capacité résiduelle d'arrêt de celui-ci.

L'invention réside ainsi dans l'équivalence faite entre une courbe de concentration en gaz sonde en fonction du temps mesurée au préalable sur un filtre de référence d'un type donné, pour plusieurs valeurs de taux de saturation, qui permet de constituer une référence, notamment par la réalisation d'abaques avec les valeurs mesurées à l'étape (c), et la courbe de concentration en gaz sonde mesurée avec un procédé non destructif sur un filtre sous test du même type que le filtre de référence. Par même type, on entend un même modèle de filtre adsorbant présentant les mêmes caractéristiques.

Selon l'invention, chaque variation brusque de la concentration en gaz sonde dans les paramètres d'injection de gaz sonde se caractérise par une valeur absolue de la dérivée de la concentration en gaz sonde par rapport au temps qui dépasse 100 ppmv/s.

Une variation brusque peut, par exemple, être un pic de concentration en gaz sonde dans le gaz porteur, un creux de concentration en gaz sonde dans le gaz porteur, ou encore un échelon montant ou descendant de concentration en gaz sonde dans le gaz porteur.

A titre d'exemple, et sans limitation de la portée du brevet, on mesure une température et une hygrométrie relative du gaz porteur, de l'air à pression atmosphérique, de 23°C et 40% respectivement. Une concentration nulle en $CO_2$ est alors injectée 2 secondes après le début de l'essai selon le procédé de l'invention, puis une variation brutale en 20ms permet d'atteindre une concentration en $CO_2$ de 4000 ppmv, avec un plateau de concentration pendant 1 seconde à 4000 ppmv avant de retrouver, en 20ms, une concentration en $CO_2$ dans le flux de gaz porteur à nouveau nulle.

La concentration en gaz sonde C pourra également, par exemple, avoir une évolution sinusoïdale de type $C = C_0 \sin(\omega * t)$ avec $\omega = \pi / T$, et une valeur nulle sinon. A titre d'exemple non restrictif, $C_{0°} = 4000$ppmv et T=1seconde.

La dérivée temporelle de la concentration en gaz sonde en aval du filtre sera moins importante en valeur absolue que la dérivée en amont du filtre et dépendra du taux de saturation du filtre. Il est donc possible, pour une variation brusque, de déterminer le taux de saturation du filtre.

Selon l'invention, le gaz sonde a une isotherme d'adsorption telle qu'à une pression partielle de 0,1 atmosphère en gaz sonde, l'isotherme d'adsorption a une capacité d'adsorption inférieure à 100 $\mu$mol de gaz sonde par gramme d'adsorbant. De même, le gaz porteur a une isotherme d'adsorption telle qu'à une pression partielle de 0,1 atmosphère en gaz porteur, l'isotherme d'adsorption a une capacité d'adsorption inférieure à 100 $\mu$mol de gaz porteur par gramme d'adsorbant. Le gaz porteur et le gaz sonde ne sont ainsi pas arrêtés par le filtre adsorbant, ou de manière négligeable donc non mesurable par une mesure de percée.

Selon un mode de réalisation, la comparaison de l'évolution de la concentration du filtre sous test et du filtre de référence comprend la recherche d'au moins un paramètre représentatif de la variation brusque de la concentration en gaz sonde sur la courbe de concentration en gaz sonde mesurée en aval du filtre, et la comparaison de ce paramètre représentatif de la variation brusque de concentration entre le filtre sous test et le filtre de référence.

Selon un mode de réalisation, la comparaison de l'évolution de la concentration du filtre sous test et du filtre de référence comprend le calcul de la durée de passage de 95% à 5% de la valeur maximale de concentration en gaz sonde en aval du filtre adsorbant obtenue après la variation brusque de la concentration en gaz sonde, et la comparaison de la valeur de la durée calculée entre le filtre sous test et le filtre de référence.

Selon un mode de réalisation, la comparaison de l'évolution de la concentration du filtre sous test et du filtre de référence comprend le calcul de la période de temps entre le début de la variation brusque du gaz sonde dans le flux de gaz porteur et le début quantifiable de la variation de concentration en gaz sonde en aval du filtre, et la comparaison de la valeur de la période de temps calculée entre le filtre sous test et le filtre de référence.

Selon un mode de réalisation, la comparaison de l'évolution de la concentration du filtre sous test et du filtre de référence comprend le calcul informatique d'un modèle mathématique à plusieurs paramètres de la courbe de concentration en gaz sonde mesurée en aval du filtre, la détermination d'une signature de la courbe de concentration constituée par l'un parmi un paramètre ou une combinaison de paramètres du modèle mathématique qui, sur la plage de variation de taux de saturation du filtre de référence, a une variation monotone et une dérivée maximale en fonction du taux de saturation, et la comparaison de la signature de la courbe de concentration entre le filtre sous test et le filtre de référence.

Selon un mode de réalisation, le gaz porteur est au moins un gaz parmi :
de l'air, du dioxygène ($O_2$), du dihydrogène ($H_2$), du diazote ($N_2$), de l'argon (Ar), de l'hélium (He), des mélanges de gaz purs précités utilisés comme gaz étalon lors de calibration, des mélanges gazeux sur- ou sous-oxygénés tels que ceux utilisés pour la plongée profonde (exemples : Trimix®, héliair, héliox, surox, nitrox, triox ou hélitrox), des gaz médicaux (exemples : le protoxyde d'azote, les mélanges équimolaires d'oxygène - protoxyde d'azote (MEOPA), monoxyde d'azote (NO)), les gaz d'exploration fonctionnelle respiratoire (EFR), les mélanges respiratoires tels que hélium/oxygène et autres mélanges de gaz utilisés pour le traitement de certaines surdités (MEDI OD 93, MEDI OD 95, ces deux mélanges étant notamment commercialisés par la société Linde Healthcare).

Selon un mode de réalisation, la température et l'hygrométrie relative du gaz porteur doivent être mesurées, sans nécessité qu'elles soient contrôlées et le débit du gaz porteur doit être mesuré et contrôlé selon une consigne définie. A titre d'exemple, et sans limitation de la portée de ce brevet : de l'air injecté au débit de 20L/min à travers le filtre sous test, dont la température et l'hygrométrie mesurées sont respectivement de 23°C et 60% d'hygrométrie relative, à pression atmosphérique.

Selon un mode de réalisation, le gaz sonde est au moins un gaz parmi :
du dioxyde de carbone ($CO_2$), protoxyde d'azote ($N_2O$), un alcane tel que méthane, éthane, propane, iso-propane, butane, pentane, ou hexane, propylène, iso-butène, un éther tel que le méthoxyméthane, des composés de la famille des gaz halogénés dont halogénoalcanes tels que chloro-méthane ($CH_3Cl$), bromobutane, hydrofluorocarbures (HFC), chloro-fluorocarbures (CFC), hydrochlorofluorocarbures (HCFC), hydrobromofluorocarbures (HBFC), bromofluorocarbures (BFC).

Le gaz sonde est différent des gaz cibles du filtre adsorbant considéré. Le gaz sonde est choisi pour ne pas être arrêté par le matériau adsorbant qui ne fait que ralentir le passage du gaz sonde par rapport au gaz porteur (par exemple l'air). A titre d'exemple, le $CO_2$ de pureté supérieure à 99%, injecté à partir d'une bonbonne de $CO_2$ comprimé détendu à 2 bars via un manomètre, constitue un choix idoine pour les filtres adsorbants à charbon actif.

Par « choisi pour ne pas être arrêté », l'homme du métier comprendra que le gaz sonde doit avoir une isotherme d'adsorption telle qu'à une pression partielle de 0,1 atmosphère en gaz sonde, l'isotherme d'adsorption doit avoir une capacité d'adsorption inférieure à 100 μmol de gaz sonde par gramme d'adsorbant. A titre d'exemple, un adsorbant de type MOF, spécifiquement développé pour arrêter du $CO_2$ (par exemple dans le document « Dynamics of $CO_2$ adsorption on Amine Adsorbents. 1. Impact of Heat Effects », (Dynamique d'absorption de CO2 sur des adsorbants amine. 1. Impact sur les effets de chaleur), Bollini et al., Ind. Eng. Chem. Res. 2012, 51, 46, 15145-15152, ou encore « Processing and performance of MOF (Metal Organic Framework)-loaded PAN nanofibrous membrane for $CO_2$ adsorption », (Traitement et performances d'une membrane nanofibreuse PAN à charge MOF) Wahiduzzaman et al., Journal of Materials Engineering and Performance, volume 25, pages 1276-1283, 2016) qui devient dès lors un gaz cible, ne pourra pas avoir comme gaz sonde du $CO_2$ et le choix de l'homme du métier devra se tourner vers d'autres gaz sondes. A titre d'exemple non limitatif, les gaz sondes suivants sont de bons candidats pour la plupart des adsorbants : du dioxyde de carbone ($CO_2$), protoxyde d'azote ($N_2O$), un alcane tel que méthane, éthane, propane, iso-propane, butane, pentane, ou hexane, propylène, iso-butène, un éther tel que le méthoxyméthane, des composés de la famille des gaz halogénés dont halogénoalcanes tels que chloro-méthane ($CH_3Cl$), bromobutane, hydrofluorocarbures (HFC), chlorofluorocarbures (CFC), hydrochlorofluorocarbures (HCFC), hydrobromofluorocarbures (HBFC), bromofluorocarbures (BFC).

Selon un mode de réalisation, les étapes (d) à (f) sont réalisées de manière ponctuelle, répétée ou périodique.

Une mesure ponctuelle revient à déterminer le taux de saturation du filtre à partir d'une seule série des étapes (d) à (f).

Des mesures répétées peuvent se faire, par exemple, toutes les minutes pendant 5 minutes, dès lors que la valeur absolue de la dérivée temporelle de concentration en gaz sonde en aval du filtre adsorbant est revenue à une valeur inférieure à 10 ppbv/s après chaque mesure ponctuelle. Ceci permet de moyenner les mesures du taux de saturation du filtre, et d'obtenir une évaluation de la saturation instantanée du filtre plus précise.

Des mesures périodiques, qu'elles soient réalisées via une seule mesure (ponctuelle) ou plusieurs mesures rapprochées (répétées), peuvent se faire, par exemple, tous les jours, afin de suivre précisément l'évolution de la saturation du filtre au cours du temps.

L'invention a également pour objet un banc d'essai selon la revendication 5 annexée comprenant :

- un régulateur de débit dont l'entrée est configurée pour être reliée à une source de gaz porteur et dont la sortie est configurée pour être reliée à l'arrivée de gaz d'un filtre adsorbant ;
- un indicateur de température, un indicateur de pression et un indicateur d'hygrométrie reliés à l'entrée du régulateur de débit ;
- un injecteur de gaz sonde dont l'entrée est configurée pour être reliée à une source de gaz sonde et dont la sortie est reliée à la sortie du régulateur de débit ;
- un détecteur de gaz sonde configuré pour être relié à la sortie de gaz du filtre adsorbant ; et
- un module de commande et de traitement de signal relié au détecteur de gaz sonde, le régulateur de débit, les indicateurs de température, de pression et d'hygrométrie, l'injecteur de gaz sonde, le détecteur de gaz sonde et le module de traitement de signal dudit banc d'essai étant configurés pour réaliser le procédé de détermination de capacité résiduelle tel que défini ci-dessus.

L'indicateur de température, l'indicateur de pression et l'indicateur d'hygrométrie peuvent, par exemple, être des capteurs ou des régulateurs (thermomètre, manomètre par exemple pour la température et la pression). La mesure de l'hygrométrie est importante car cette hygrométrie a un impact sur la courbe de concentration en gaz sonde en aval du filtre en fonction du temps. Les abaques réalisés en tiennent compte.

Ainsi, le régulateur de débit, permet de maintenir l'écoulement d'un flux de gaz porteur à débit constant à travers le matériau constitutif du filtre adsorbant ; les indicateurs (par exemple, capteurs ou régulateurs) de température et d'hygrométrie permettent, quant à eux, de connaître le taux d'hygrométrie et la température du système au moment de la mesure ; l'injecteur de gaz sonde permet l'injection, en amont de l'arrivée de gaz du filtre adsorbant, d'un gaz sonde dans le flux de gaz porteur avec des variations de concentration rapides (supérieure à 100ppmv/s) ; le détecteur de gaz sonde permet la mesure de la courbe de concentration en gaz sonde en fonction du temps en aval de la sortie de gaz du filtre adsorbant ; et le module de traitement de signal permet l'analyse de la courbe de concentration en gaz sonde mesurée et la détermination de la capacité résiduelle du filtre adsorbant en fonction de ladite analyse.

Selon un mode de réalisation, le détecteur de gaz sonde est au moins l'un parmi : un détecteur infrarouge (IR) tel qu'un détecteur IR simple, un détecteur IR à transformée de Fourier ou un détecteur IR non dispersif, un spectromètre de masse, un détecteur photo-acoustique, un catharomètre et un capteur électrochimique.

Le détecteur de gaz sonde doit avoir un faible temps de réponse par rapport à la durée de la variation brusque mesurée (cas de l'injection d'un brusque signal de gaz sonde ou cas de l'échelon de type front montant ou descendant), typiquement au moins 10 acquisitions pendant la durée de la variation brusque de manière à pouvoir mesurer la concentration de gaz sonde en aval du filtre adsorbant au cours du temps (mesure dite en continu). Ceci différencie le présent dispositif d'un dispositif de mesure de percée, car le temps de réponse du détecteur doit être sensiblement plus court dans le cas de la présente invention, par exemple d'au moins 1 Hz.

Selon un mode de réalisation, l'injecteur de gaz sonde est une vanne pilotée par un module de commande électronique apte à s'ouvrir et à se fermer en moins de 50 ms, par exemple, une électrovanne pilotée par un ordinateur, une vanne pneumatique, une vanne à commande électromagnétique, une boucle d'injection, associée à un limiteur de débit, lui-même raccordé à un détendeur, lui-même relié à une bouteille du gaz sonde comprimé. Ainsi, le pilotage de la vanne reliée à la source de gaz sonde permet la génération d'une variation brusque de gaz sonde dans le flux de gaz porteur. Ceci différencie le présent dispositif d'un dispositif de mesure de percée, car le temps de réponse de cette vanne doit être sensiblement plus court dans le cas de la présente invention, pour s'ouvrir et se fermer en quelques millisecondes.

Selon un mode de réalisation, l'injecteur de gaz sonde est un régulateur de débit piloté par un module de commande électronique, le régulateur de débit ayant une vanne apte à s'ouvrir et à se fermer en moins de 50 ms. Ainsi, le pilotage du régulateur de débit relié à la source de gaz sonde permet la génération d'une variation brusque de la concentration en gaz sonde dans le flux de gaz porteur.

Selon un mode de réalisation, l'injecteur de gaz sonde est une seringue à gaz.

Contrairement à l'état de la technique, le gaz sonde selon l'invention est choisi pour ne pas être arrêté par le matériau adsorbant du filtre. A ce titre, l'invention est donc non destructive et différente d'une méthode par percée : la méthode utilisée ne diminue pas la capacité d'arrêt du filtre testé. De plus, les temps d'injection en gaz sonde sont très petits (de l'ordre de quelques secondes) devant les temps d'efficacité du filtre adsorbant vis-à-vis d'un gaz cible (de l'ordre de quelques heures). Il y a donc une différence de nature (non destructif) et de paramètres (durées, moyen de test, nature du gaz) entre cette méthode et une mesure par percée.

Pour mieux illustrer l'objet de la présente invention, on va en décrire ci-après, à titre illustratif et non limitatif, un mode de réalisation préféré, avec référence aux dessins annexés.

Sur ces dessins :

- [Fig.1] est un schéma fonctionnel d'un banc d'essai selon la présente invention ;
- [Fig.2] est un organigramme représentant un procédé de détermination de capacité résiduelle selon la présente invention ;
- [Fig.3] est un graphique représentant des courbes expérimentales et modélisées de la concentration en $CO_2$ en aval d'un filtre adsorbant en fonction du temps pour différents taux de saturation du filtre adsorbant ;
- [Fig.4] est un graphique représentant l'évolution d'un paramètre de modélisation des courbes expérimentales de la [Fig.3] en fonction du taux de saturation du filtre adsorbant ;
- [Fig.5a] est un graphique illustrant l'évolution de la concentration en gaz sonde en aval du filtre avec l'injection d'une variation brusque de concentration en gaz sonde en amont du filtre pour un premier exemple de gaz sonde ;
- [Fig.5b] est un graphique illustrant l'évolution de la concentration en gaz sonde en aval du filtre avec l'injection d'une variation brusque de concentration en gaz sonde en amont du filtre pour un second exemple de gaz sonde ;
- [Fig.6a] est un graphique illustrant l'évolution de la concentration en gaz sonde en aval du filtre avec l'injection d'un échelon de type front montant ;
- [Fig.6b] est un graphique illustrant l'évolution de la concentration en gaz sonde en aval du filtre avec l'injection d'un échelon de type front descendant ;
- [Fig.7] est une illustration d'une courbe classique de percée montrant l'évolution du taux de saturation du filtre adsorbant ; et
- [Fig.8] est un schéma à titre d'exemple illustrant le procédé selon l'invention.

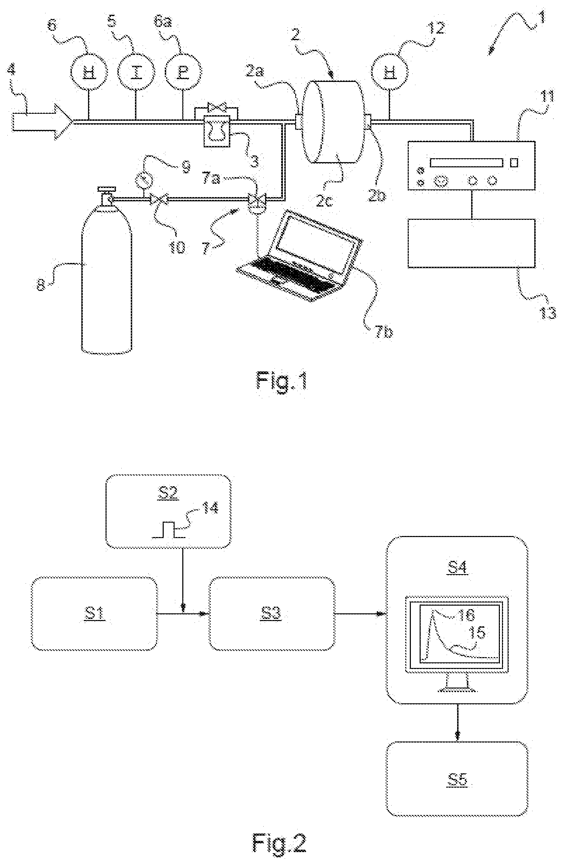

Si l'on se réfère à la [Fig.1], on peut voir qu'il y est représenté un banc d'essai 1 selon la présente invention configuré pour déterminer la capacité résiduelle d'arrêt d'un filtre adsorbant 2.

Le filtre adsorbant 2 comprend une arrivée de gaz 2a, une sortie de gaz 2b et un matériau adsorbant 2c disposé entre l'arrivée de gaz 2a et la sortie de gaz 2b.

Le filtre adsorbant 2 peut, par exemple, être un filtre de masque de protection respiratoire ou un filtre permettant d'épurer l'air vis-à-vis d'un produit polluant dans un véhicule.

Lesdits matériaux adsorbants permettent de purifier un gaz les traversant, tel que de l'air, vis-à-vis d'un ou plusieurs produits gaz cibles.

Le banc d'essai 1 comprend un régulateur de débit 3 dont l'entrée est reliée de manière fluidique à une source de gaz porteur 4 et dont la sortie est reliée de manière fluidique à l'arrivée de gaz 2a du filtre adsorbant 2.

Le gaz porteur contenu dans la source de gaz porteur 4 est au moins un gaz parmi :

de l'air, du dioxygène ($O_2$), du dihydrogène ($H_2$), du diazote ($N_2$), de l'argon (Ar), de l'hélium (He), des mélanges de gaz purs précités utilisés comme gaz étalon lors de calibration, des mélanges gazeux sur- ou sous-oxygénés tels que ceux utilisés pour la plongée profonde (exemples : Trimix®, héliair, héliox, surox, nitrox, triox ou hélitrox), des gaz médicaux (exemples : le protoxyde d'azote, les mélanges équimolaires d'oxygène - protoxyde d'azote (MEOPA), monoxyde d'azote (NO)), les gaz d'exploration fonctionnelle respiratoire (EFR), les mélanges respiratoires tels que hélium/oxygène et autres mélanges de gaz utilisés pour le traitement de certaines surdités (MEDI OD 93, MEDI OD 95).

Le banc d'essai 1 comprend en outre un indicateur (par exemple, capteur ou régulateur) de température 5, un indicateur (par exemple, capteur ou régulateur) d'hygrométrie 6 et un indicateur de pression 6a reliés de manière fluidique à l'entrée du régulateur de débit 3.

Le régulateur de débit 3, et les indicateurs de température 5 et d'hygrométrie 6 et de pression 6a permettent ainsi l'écoulement d'un flux de gaz porteur régulé en débit à travers le matériau adsorbant 2c du filtre adsorbant 2, en ayant connaissance des température et hygrométrie de la mesure.

Le banc d'essai 1 comprend en outre un injecteur de gaz sonde 7 dont l'entrée est reliée de manière fluidique à une source de gaz sonde 8 de type bouteille de gaz par l'intermédiaire d'un manomètre 9 et d'un détendeur 10 et dont la sortie est reliée de manière fluidique à la sortie du régulateur de débit 3.

L'injecteur de gaz sonde 7 permet ainsi la création, en amont de l'arrivée de gaz 2a du filtre adsorbant 2, d'une variation brusque de la concentration en gaz sonde d'une durée prédéfinie dans le flux de gaz porteur. La variation brusque peut par exemple être un pic de concentration de gaz sonde dans le gaz porteur, un creux de concentration de gaz sonde dans le gaz porteur ou encore un échelon montant ou descendant de concentration en gaz sonde dans le gaz porteur.

Le gaz sonde contenu dans la source de gaz sonde 8 est choisi pour ne pas être arrêté par le matériau adsorbant du filtre. Par « choisi pour ne pas être arrêté », l'homme du métier comprendra que le gaz sonde doit avoir une isotherme d'adsorption telle qu'à une pression partielle de 0,1 atmosphère en gaz sonde, l'isotherme d'adsorption doit avoir une capacité d'adsorption inférieure à 100 µmol de gaz sonde par gramme d'adsorbant.

L'injecteur de gaz sonde 7 est constitué dans le cas présent d'une électrovanne 7a pilotée par un ordinateur 7b. Il est à noter que l'injecteur de gaz sonde 7 pourrait également être n'importe quel type de vanne pilotée par un module de commande électronique (par exemple une électrovanne pilotée par un ordinateur, une vanne pneumatique ou une boucle d'injection), sans s'écarter du cadre de la présente invention. Le pilotage de l'électrovanne 7a par l'ordinateur 7b permet la génération d'une brusque variation de concentration en gaz sonde dans le flux de gaz porteur. La vanne est apte à s'ouvrir et à se fermer en 50 ms pour générer des variations brusques concentration du gaz sonde dans le gaz porteur.

Le banc d'essai 1 comprend en outre un détecteur de gaz sonde 11 relié de manière fluidique à la sortie de gaz 2b du filtre adsorbant 2.

Le détecteur de gaz sonde 11 permet ainsi la mesure de la courbe de concentration en gaz sonde en fonction du temps en aval de la sortie de gaz 2b du filtre adsorbant 2.

Un indicateur (par exemple, capteur ou régulateur) d'hygrométrie supplémentaire 12 est, de préférence, également relié de manière fluidique à la sortie de gaz 2b du filtre adsorbant 2.

Le détecteur de gaz sonde 11 est un détecteur infrarouge à faible temps de réponse (par exemple, un détecteur infrarouge de $CO_2$ dans le cas d'un gaz sonde de type $CO_2$), mais pourrait également être un quelconque autre détecteur approprié pour détecter le fluide sonde, tel qu'un type quelconque de détecteurs infrarouge (par exemple, des détecteurs IR simples, des détecteurs IR à transformée de Fourrier ou des détecteurs IR non dispersifs), un spectromètre de masse, un détecteur photo-acoustique, un catharomètre ou un capteur électrochimique, sans s'écarter du cadre de la présente invention.

Le banc d'essai 1 comprend en outre un module de traitement de signal 13 relié au détecteur de gaz sonde 11. Le module de traitement de signal 13 permet l'analyse de la courbe de concentration en gaz sonde mesurée par le détecteur de gaz sonde 11 et la détermination de la capacité résiduelle du filtre adsorbant 2 en fonction ladite analyse. Il est à noter que le module de traitement de signal 13 pourrait également être relié à l'ordinateur 7b, sans s'écarter du cadre de la présente invention.

Si l'on se réfère à la [Fig.2], on peut voir qu'il y est représenté un organigramme représentant des étapes du procédé de détermination de la capacité résiduelle du filtre adsorbant 2 à l'aide du banc d'essai 1.

Le procédé non destructif de détermination de la capacité résiduelle d'arrêt d'un filtre adsorbant de type donné, le filtre adsorbant étant apte à adsorber un gaz cible, comprend les étapes suivantes :

(a) choisir un gaz sonde et un gaz porteur aptes à traverser un filtre adsorbant du type donné non saturé en gaz cible sans y rester fixé, le gaz sonde étant destiné à être mélangé au gaz porteur pour être injecté dans le filtre adsorbant du type donné,
(b) à température, pression et hygrométrie de fonctionnement données, choisir des paramètres d'injection de gaz sonde et de gaz porteur dans un filtre adsorbant du type donné, les paramètres d'injection comprenant, pour le gaz sonde et le gaz porteur, une durée et une courbe de débit en fonction du temps données, la concentration du gaz sonde dans le gaz porteur comportant au moins une variation brusque pendant la durée d'injection,
pour un filtre adsorbant du type donné, appelé filtre de référence,
(c) injecter, aux température, pression et hygrométrie de fonctionnement données, le gaz sonde et le gaz porteur dans le filtre de référence selon les paramètres d'injection de l'étape (b) et mesurer l'évolution de la concentration en gaz sonde en fonction du temps en aval du filtre de référence pour des quantités de matière croissantes de gaz cible connues adsorbées par le filtre de référence, la dernière de ces quantités correspondant au claquage du filtre de référence, et déduire la capacité d'arrêt $m_a$ du filtre de référence,,
pour un filtre adsorbant du type donné dont on cherche à déterminer la capacité résiduelle d'arrêt, appelé filtre sous test,
(d) injecter, aux température, pression et hygrométrie de fonctionnement données, le gaz sonde et le gaz porteur dans le filtre sous test selon les paramètres d'injection de l'étape (b) et mesurer l'évolution de la concentration en gaz sonde en fonction du temps en aval du filtre sous test,
(e) comparer l'évolution en fonction du temps de la concentration en gaz sonde pour le filtre sous test et pour le filtre de référence pour déterminer une valeur de taux de saturation du filtre sous test $\tau_{sft}$, et
(f) déduire la capacité résiduelle d'arrêt du filtre sous test par le calcul suivant : capacité résiduelle d'arrêt = $(1 - \tau_{sft}) * m_a$.

L'étape (d) du procédé de détermination de capacité résiduelle se déroule de la façon suivante pour le filtre sous test : la régulation S1 en débit, à température, pression et hygrométrie de fonctionnement données, à l'aide du régulateur de débit 3 et des indicateurs de température 5, de pression 6a et d'hygrométrie 6, d'un flux de gaz porteur en provenance de la source de gaz porteur 4 ; l'injection S2, à l'aide de l'injecteur de gaz sonde 7 à partir de la source de gaz sonde 8, d'une brusque variation de concentration en gaz sonde dans le flux de gaz porteur; l'écoulement S3 du flux de gaz porteur régulé portant la brusque variation 14 de gaz sonde à travers le matériau adsorbant 2c du filtre adsorbant 2, le front de gaz sonde avançant ainsi dans les couches du matériau adsorbant 2c ; la mesure S4, par le détecteur de gaz sonde 11, de la courbe de concentration en gaz sonde 15 en fonction du temps en aval de la sortie de gaz 2b du filtre adsorbant 2.

Le procédé se poursuit aux étapes (e) et (f) avec l'analyse S5 de la courbe de concentration en gaz sonde 15 mesurée à l'aide du module de traitement de signal 13 et la détermination de la capacité résiduelle du filtre adsorbant 2 en fonction ladite analyse, le module de traitement de signal 13 permettant de modéliser la courbe de concentration en gaz sonde 15 mesurée de manière à remonter aux indicateurs du taux de saturation du filtre adsorbant 2.

Ainsi, le procédé selon l'invention permet de mesurer de manière précise et fiable la saturation du matériau adsorbant 2c du filtre adsorbant 2 de manière à déterminer la capacité résiduelle du filtre adsorbant 2 de façon non destructive et non spécifique.

L'analyse S5 de la courbe de concentration en gaz sonde 15 comprend la recherche d'une variation brusque, dans l'exemple représenté un pic de concentration 16 sur la courbe de concentration en gaz sonde 15, et la détermination de la capacité résiduelle du filtre adsorbant 2 comprend la comparaison des valeurs des paramètres représentatifs du pic de concentration 16 trouvé à une base de données existante de valeurs de pic (ou abaques existants) de manière à déterminer la capacité résiduelle du filtre adsorbant 2.

La forme de la courbe de concentration en gaz sonde 15 étant dépendante du taux de saturation du filtre adsorbant 2, la valeur du pic de concentration 16 trouvé sur la courbe de concentration en gaz sonde 15 permet ainsi de déterminer le taux de saturation du filtre adsorbant 2 testé, et ainsi la capacité résiduelle d'arrêt de celui-ci.

L'analyse S5 de la courbe de concentration en gaz sonde 15 peut, en variante ou en outre, comprendre le calcul du temps de décroissance du pic de concentration 16 trouvé. Le temps de décroissance est défini comme le temps écoulé pour passer d'une concentration en gaz sonde de 95% à 5% de la valeur maximale du pic de concentration mesuré. La détermination de la capacité résiduelle du filtre adsorbant 2 peut, en outre, comprendre la comparaison de la valeur de la décroissance de concentration calculée à une base de données existante, réalisée via l'étape (c) du présent procédé, de valeurs de décroissance (ou abaques existants) de manière à déterminer de manière plus précise la capacité résiduelle du filtre adsorbant 2.

L'analyse S5 de la courbe de concentration en gaz sonde 15 peut, en variante ou en outre, comprendre le calcul de la période de temps entre le début de la brusque variation de concentration en gaz sonde 14 dans le flux de gaz porteur et le début quantifiable de la croissance du pic de concentration 16 trouvé, et la détermination de la capacité résiduelle du filtre adsorbant 2 peut en outre comprendre la comparaison de la valeur de la période de temps calculée à une base de données existante de valeurs de période de temps (ou abaques existants) de manière à déterminer de manière plus précise la capacité résiduelle d'arrêt du filtre adsorbant 2.

L'analyse S5 de la courbe de concentration en gaz sonde 15 peut, en variante ou en outre, comprendre la modélisation de la courbe de concentration en gaz sonde mesurée par calcul de paramètres de modélisation, et la détermination de la capacité résiduelle du filtre adsorbant 2 peut en outre comprendre la comparaison desdits paramètres de modélisation calculés à une base de données existante ou à un modèle théorique.

La concentration du gaz sonde injecté dans le flux de gaz porteur est constante pendant la durée prédéfinie de la brusque variation de gaz sonde 14. Ainsi, une concentration nulle en gaz sonde 14 est injectée, par exemple 2 secondes après le début de l'essai, puis une variation brutale, par exemple en 20ms, permet d'atteindre une concentration en gaz sonde 14 de 4000 ppmv, avec un plateau de concentration, par exemple pendant 1 seconde, à 4000 ppmv avant de retrouver, par exemple à nouveau en 20ms, une concentration en gaz sonde 14 dans le flux de gaz porteur à nouveau nulle. La concentration en gaz sonde est nulle durant toute la durée de l'essai, sauf entre deux bornes définissant la brusque variation de gaz sonde 14. Entre ces deux bornes (t = 0 et t = T), la concentration en gaz sonde 14 est non nulle et constante. La durée de la brusque variation (T) est ainsi définie comme la durée pendant laquelle la concentration en gaz sonde 14 envoyée vaut $C = C_0$.

Il est à noter que la concentration du gaz sonde injecté dans le flux de gaz porteur pourrait également être variable pendant la durée prédéfinie de la brusque variation de gaz sonde 14, sans s'écarter du cadre de la présente invention. La concentration en gaz sonde C pourra également, par exemple, avoir une évolution sinusoïdale de type $C = C_0 \sin(\omega * t)$ avec $\omega = \pi / T$, et une valeur nulle sinon.

Plusieurs mesures successives de la capacité résiduelle d'arrêt peuvent être réalisées afin de déterminer de manière plus fiable et précise la capacité résiduelle du filtre adsorbant 2 d'essai en essai.

Une mesure ponctuelle revient à déterminer le taux de saturation du filtre à partir d'une seule série des étapes (d) à (f).

Des mesures répétées peuvent se faire, par exemple, toutes les minutes pendant 5 minutes, dès lors que la valeur absolue de la dérivée temporelle de concentration en gaz sonde 14 en aval du filtre adsorbant est revenue à une valeur inférieure à 10 ppbv/s après chaque mesure ponctuelle. Ceci permet de moyenner les mesures du taux de saturation du filtre, et d'obtenir une évaluation de la saturation instantanée du filtre plus précise.

Si l'on se réfère à la [Fig.3], on peut voir qu'il y est représenté, à titre d'exemple, des courbes expérimentales et des courbes modélisées de la concentration en $CO_2$ en fonction du temps en aval du filtre adsorbant 2, pour différents taux de saturation du filtre adsorbant 2 (à savoir, 0%, 10%, 19%, 32%, 48%, 65% et 100%).

Lors de ces expérimentations à titre d'exemple, l'injecteur de gaz sonde 7 a généré de brusques variations de la concentration en $CO_2$ dans le flux de gaz porteur, pendant une durée d'une seconde, à partir d'une bouteille de $CO_2$ (50 bar) et détendu à 0,6 bar relatif dans un flux d'air à 20 L.min$^{-1}$, 23°C et 40 %HR (humidité relative), pression atmosphérique, au travers d'un lit de charbon actif d'un filtre de masque de protection respiratoire en tant que filtre adsorbant 2.

Le détecteur de gaz sonde 11 (ici un détecteur infrarouge de $CO_2$ à faible temps de réponse) a enregistré, toutes les 500 ms, en aval du filtre adsorbant 2 la concentration du gaz sonde ($CO_2$) en fonction du temps.

Les différentes courbes expérimentales obtenues varient en fonction de la saturation du filtre adsorbant 2. Lorsque la brusque variation de concentration en gaz sonde, ici, un pic, est effectuée sur un lit à faible taux de saturation, la hauteur du pic de concentration en gaz sonde en aval du filtre est plus faible que lorsque la mesure est faite sur le même matériau adsorbant dont le taux de saturation est plus élevé.

Les différentes courbes de la [Fig.3] représentent l'évolution du pic de la courbe de concentration en gaz sonde avec l'accroissement du taux de saturation du lit de charbon actif en agent cible sorbé (ici physisorbé mais pouvant être un agent cible chimisorbé) pour sept essais expérimentaux (c'est-à-dire, pour un taux de saturation, respectivement, de 0%, 10%, 19%, 32%, 48%, 65% et 100%).

Les courbes en trait pointillé représentent chacune une moyenne des valeurs expérimentales de concentrations en aval résultant du passage du brusque signal de $CO_2$ au travers d'un lit de charbon actif en fonction du temps dans un flux d'air porteur à 20 L.min$^{-1}$, 40 %HR et 23°C, chaque courbe en trait pointillé correspondant au pourcentage du taux de saturation indiqué à proximité de son pic de concentration.

Les courbes en trait plein représentent quant à elles la modélisation mathématique des courbes expérimentales.

Les courbes expérimentales obtenues sont modélisées par l'équation (1) suivante :

[Math.3]

$$y = x_4 + \frac{1}{2} \cdot \frac{x_5}{x_3} \times \exp\left(\frac{1}{2} \cdot \left(\frac{x_2}{x_3}\right)^2 - \frac{t - x_1}{x_3}\right) \times erfc\left(\frac{\dfrac{x_2}{x_3} - \dfrac{t - x_1}{x_2}}{\sqrt{2}}\right)$$

où exp désigne la fonction exponentielle, erfc désigne la fonction d'erreur complémentaire, y désigne la concentration, t désigne le temps, et $x_1$ à $x_5$ correspondent aux cinq paramètres de l'équation qui sont déterminés par un logiciel de calcul mathématique pour trouver une courbe d'équation selon l'équation ci-dessus qui s'approche le plus de la courbe trouvée expérimentalement par une méthode de minimisation de distance, par exemple par la méthode dite des moindres carrés.

En pratique, on injecte les mesures expérimentales dans un logiciel de calcul mathématique avec l'équation ci-dessus que l'on cherche à modéliser, le logiciel de calcul calculera les valeurs des paramètres $x_1$ à $x_5$ qui donnent une courbe théorique selon l'équation ci-dessus la plus proche des valeurs expérimentales.

Certains paramètres de l'équation permettant la modélisation fine du pic de concentration mesuré en aval du filtre adsorbant 2 sont dépendants du taux de saturation du filtre adsorbant 2. Ainsi, plus le filtre adsorbant 2 est saturé, plus haut est le pic de concentration en $CO_2$ en aval du filtre adsorbant 2. De plus, plus le filtre adsorbant 2 est saturé, plus la décroissance de concentration après le pic est rapide. Enfin, le temps entre la génération du brusque signal et la montée en concentration en aval du filtre est d'autant plus court que le filtre adsorbant 2 est saturé.

Pour chaque courbe expérimentale de la [Fig.3], cinq brusques variations de la concentration en $CO_2$ d'une seconde, avec un temps d'acquisition de 130 secondes, ont été injectées dans le flux d'air porteur. Lors de la première injection, un équilibrage du système a lieu, la première courbe est légèrement plus élevée que les suivantes. Afin d'éviter une dispersion des résultats, cette première courbe a été écartée car elle témoigne de l'équilibrage du système adsorbant. La moyenne des quatre brusques signaux suivants a ensuite été effectuée. C'est cette courbe moyenne expérimentale (en trait pointillé sur la [Fig.3]) qui a alors été modélisée mathématiquement (en trait plein sur la [Fig.3]).

Il a été constaté que le paramètre le plus fiable pour mesurer le taux de saturation du filtre adsorbant 2 est le paramètre $x_3$. En effet, c'est le paramètre qui présente la plus grande variation sur la plage de taux de saturation du filtre adsorbant, donc ayant la plus grande dérivée par rapport au taux de saturation, et qui a une évolution monotone par rapport au taux de saturation. Pour autant, d'autres paramètres ou combinaisons de paramètres (par exemple, hauteur de pic, $x_1$, etc.) permettent également de remonter au taux de saturation du filtre adsorbant 2, pour autant qu'ils satisfassent les deux critères précités.

Si l'on se réfère à la [Fig.4], on peut voir qu'il y est représenté l'évolution du paramètre de modélisation $x_3$ en fonction du taux de saturation du filtre adsorbant 2, le paramètre x3 étant issu de Math. 2 lors de l'approximation par la méthode des moindres carrés obtenu en [Fig.3], et l'on peut constater sa monotonie et son évolution important en fonction du taux de saturation.

En contrôlant l'empoisonnement du filtre adsorbant 2 par remplissage de la porosité du matériau adsorbant par un gaz cible ou parasite, des abaques peuvent être constitués en fonction du taux de saturation du filtre adsorbant 2.

En effectuant l'expérimentation décrite à la [Fig.3] (c'est-à-dire, cinq brusques injections successives de $CO_2$) au fur et à mesure du remplissage de la porosité du matériau adsorbant par un gaz cible, il est possible d'obtenir la courbe représentant, sur la [Fig.4], la décroissance du paramètre $x_3$ (paramètre lié à la décroissance de concentration du pic de concentration en gaz sonde) en fonction du taux de saturation du filtre adsorbant 2.

Il est à noter que le paramètre $x_3$ obtenu par modélisation croît en fonction de la masse de charbon actif du filtre adsorbant 2, tandis que le maximum du pic de concentration diminue en fonction de la masse de charbon actif du filtre adsorbant 2.

L'expérimentation qui vient d'être décrite a été réalisée avec un empoisonnement de la porosité du filtre adsorbant 2 par une vapeur physisorbée (phénomène réversible de surface). Cependant, la même démarche a été également réalisée avec une vapeur chi-misorbée (fixée de façon irréversible à la surface) pour un résultat similaire, ce qui démontre que le procédé selon l'invention est universel et convient pour tout type de gaz arrêté par un matériau adsorbant.

En mettant en place des tests réguliers sur des filtres adsorbants à l'aide du procédé de l'invention, ceci permet :

- d'éviter un changement systématique des filtres adsorbants en place sans savoir s'ils sont ou non encore utilisables ;
- de tester des filtres adsorbants et connaître leurs capacités de filtration initiales ;
- de limiter la taille des filtres, grâce à un suivi plus fin de leur saturation, et de faire ainsi des économies d'énergie, un filtre adsorbant plus petit ayant une plus petite perte de charge ;
- de remplacer des filtres adsorbants qui sont défectueux, saturés prématurément, par exemple, par des résidus de pots d'échappements ; et

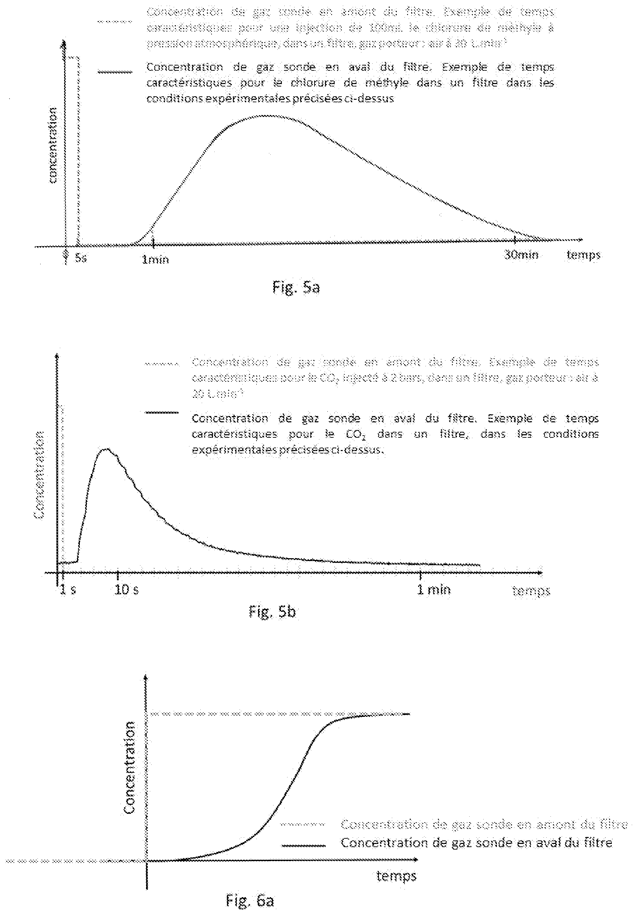

les Figures 5a et 5b illustrent l'injection d'un brusque signal de gaz sonde en amont du filtre (trait discontinu) et l'évolution de la concentration du gaz sonde en aval du filtre, la [Fig.5b] illustrant un exemple de temps caractéristiques pour le $CO_2$ injecté à 2 bars, sur un filtre de masque de protection respiratoire, le gaz porteur étant l'air à 20 L/min et l'hygrométrie à 80% stabilisée, la [Fig.5a] illustrant un exemple de temps caractéristiques pour le chlorure de méthyle injecté via une seringue à gaz (100 mL à pression atmosphérique), sur un filtre de masque de protection respiratoire, le gaz porteur étant de l'air à 30 L.min$^{-1}$ et 50 % d'hygrométrie.

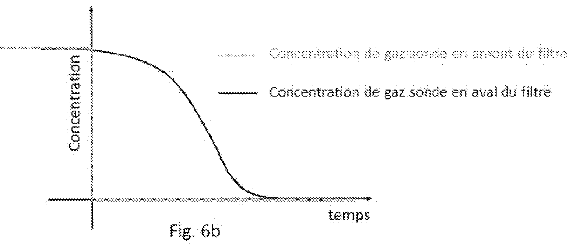

Les Figures 6a et 6b illustrent quant à elles respectivement l'injection d'un front montant de gaz sonde en amont du filtre, et l'évolution de la concentration en gaz sonde en aval du filtre, et l'injection d'un front descendant de gaz sonde en amont du filtre, et l'évolution de la concentration en gaz sonde en aval du filtre.

Ces exemples illustrent le caractère innovant de l'invention, par le choix du gaz sonde qui n'est pas arrêté par le matériau adsorbant du filtre adsorbant, et dont on utilise l'évolution de la concentration en aval du filtre sur la base d'une brusque variation de concentration en amont du filtre.

La [Fig.7] décrit une courbe de percée classique. On injecte dans le filtre adsorbant le produit cible à concentration constante $C_0$. On définit une concentration cible $C_c$ que l'on souhaite ne pas dépasser en sortie du filtre adsorbant. Le claquage correspond à l'obtention de la concentration C en gaz cible en aval du filtre égale à $C_c$. Le temps d'efficacité du filtre adsorbant correspond au temps écoulé entre le début d'injection du gaz cible en amont du filtre et l'obtention de $C=C_c$ en aval du filtre.

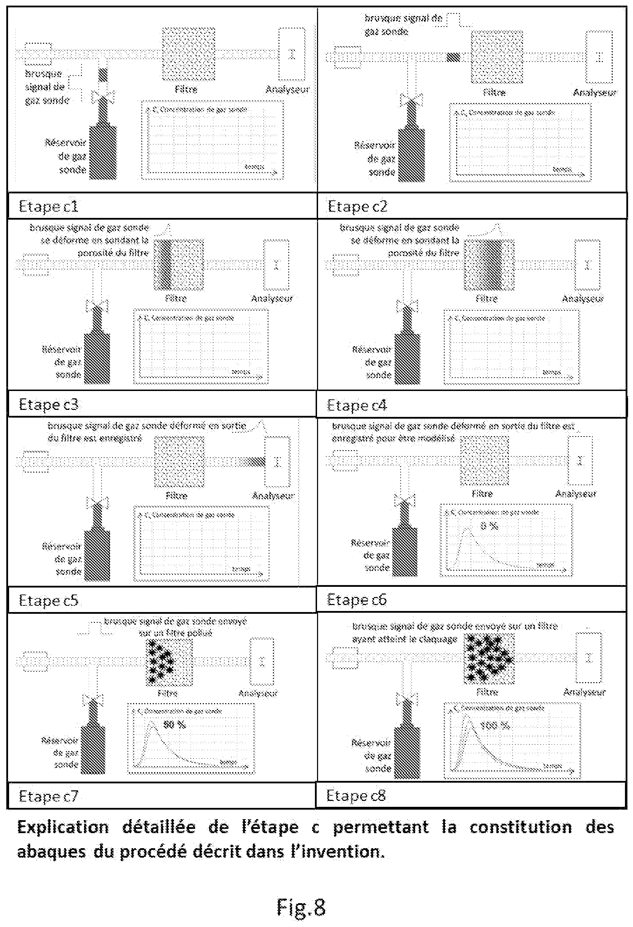

A titre d'exemple, la création préalable des abaques, correspondant à l'étape (c) du procédé décrit ci-dessus, est décrite en [Fig.8], et est réalisée de la façon suivante.

Pour plusieurs valeurs du taux de saturation du filtre adsorbant, ici le filtre de référence, on envoie une brusque variation de gaz sonde, ici un pic de concentration du gaz sonde dans le gaz porteur.

En étape c1, le pic de concentration est généré par le réservoir de gaz sonde, et envoyé sur le filtre adsorbant en étape c2. On peut voir qu'aux étapes c1 à c6, le filtre est non saturé (0%). En étape c3 et c4, le pic de gaz sonde traverse le filtre adsorbant, puis on mesure en étape c5 la concentration en gaz sonde en aval du filtre adsorbant pour obtenir la courbe d'évolution de concentration en gaz sonde dans le gaz porteur en fonction du temps illustrée en étape c6, correspondant au filtre à l'état entièrement non saturé en gaz cible.

On répète ensuite les étapes avec différents états de saturation du filtre adsorbant (50% en étape c7, 100% en étape c8) pour obtenir les courbes d'évolution de concentration en gaz sonde dans le gaz porteur en fonction du temps illustrée en étape c8.

On pourra ensuite exploiter ces courbes pour déterminer l'état de saturation d'un filtre sous test avec les étapes (d) à (f) du procédé de l'invention.

Le tableau 1 ci-dessous explicite le protocole suivi et illustre les différences entre l'invention et un banc de percée classique, avec 5 injections de gaz sonde $CO_2$ pour la variation brusque de concentration en gaz sonde en aval du filtre de référence pour le procédé selon l'invention :

[Tableaux1]

| Etapes d'essai | Dispositif de test selon l'invention | Banc de percé classique |
|---|---|---|
| 1. Génération de 5 injections de gaz sonde $CO_2$ sur un filtre adsorbant à l'état initial, pour un débit de 20L/min en gaz porteur (air à pression atmosphérique, 23°C, 70% hygrométrie relative). Injection de 4000 ppmv de $CO_2$ pendant 1 seconde. | X | |
| 2. Remplissage du filtre en gaz cible, du cyclohexane, jusqu'à 10 % du $t_{eff}$* | | X |
| 2bis. Génération de 5 injection de gaz sonde $CO_2$ sur ce filtre adsorbant pour ce taux de saturation de 10% | X | |
| 3. Remplissage du filtre en gaz cible jusqu'à 19 % du $t_{eff}$* | | X |
| 3bis. Génération de 5 injection de gaz sonde $CO_2$ sur ce filtre adsorbant pour ce taux de saturation de 19% | X | |
| 4. Remplissage du filtre en gaz cible jusqu'à 32 % du $t_{eff}$* | | X |
| 4bis. Génération de 5 injection de gaz sonde $CO_2$ sur ce filtre adsorbant pour ce taux de saturation de 32% | X | |
| 5. Remplissage du filtre en gaz cible jusqu'à 48 % du $t_{eff}$* | | X |
| 5bis. Génération de 5 injection de gaz sonde $CO_2$ sur ce filtre adsorbant pour ce taux de saturation de 48% | X | |
| 6. Remplissage du filtre en gaz cible jusqu'à 65 % du $t_{eff}$* | | X |
| 6bis. Génération de 5 injection de gaz sonde $CO_2$ sur ce filtre adsorbant pour ce taux de saturation de 65% | X | |
| 7. Remplissage du filtre en agent jusqu'au $t_{eff}$* et détermination de la quantité de matière en gaz cible injectée pour obtenir ce claquage. | | X |
| 7bis : Génération de 5 injection de gaz sonde $CO_2$ sur ce filtre adsorbant claquée, c'est-à-dire un taux de saturation de 100%. | X | |
| *$t_{eff}$ = temps d'efficacité du filtre mesuré au préalable dans les mêmes conditions d'essai (température, hygrométrie, débit et concentration en gaz cible) | | |

Cette abaque permet de mettre en évidence une évolution des pics de concentration en gaz sonde $CO_2$ en aval du filtre, au fur et à mesure de l'augmentation de la saturation de celui-ci (voir [Fig.3]). L'équation (1) permet d'approximer mathématiquement la courbe, par un algorithme classique de minimisation de la distance entre courbe expérimentale et courbe théorique. Le paramètres $x_3$ est ainsi mesuré pour différents niveaux de saturation du filtre adsorbant (voir [Fig.4]). Les différentes valeurs mesurées de $x_3$ pour différents taux de saturation sont ensuite reliées par une approximation affine afin d'établir une fonction bijective entre la valeur de $x_3$ ainsi déterminée et le taux de saturation du filtre.

Cette abaque est propre à ce modèle de filtre adsorbant, cette hygrométrie (70% d'hygrométrie relative) et cette température (23°C). D'autres abaques doivent être réalisées pour d'autres modèles de filtres adsorbants, hygrométrie, température.

A titre d'exemple, le procédé de l'invention est illustré dans le cadre de la mesure du taux de saturation d'un filtre adsorbant pour masque de protection respiratoire :

1/ Choix du gaz porteur : air à pression atmosphérique, traversant le filtre adsorbant à 20L/min, de température mesurée 20°C et d'hygrométrie relative mesurée 40%.
2/ Choix du gaz sonde : $CO_2$, de pureté 99,9%
3/ Injection du $CO_2$ selon la courbe en [Fig.5b]
4/ Mesure de la concentration en $CO_2$ à la fréquence 2Hz, par un capteur infrarouge à transformée de Fourier et enregistrement desdites valeurs pendant 130s à compter du début de l'injection de $CO_2$ en amont du filtre
5/ Approximation de la concentration en $CO_2$ mesurée en aval du filtre en utilisant l'équation 1, et utilisation d'un algorithme classique de minimisation de la distance entre la courbe expérimentale et la courbe théorique pour obtenir la valeur de $x_3$.

6/ Comparaison de la valeur de $x_3$ à une table d'abaques réalisée sur un filtre de référence préalablement au test, en regardant l'abaque réalisée sur ce modèle de filtre adsorbant, cette température (23°C) et cette hygrométrie (40%) : obtention de la valeur du taux de saturation à partir de la courbe d'abaque donnant le taux de saturation en fonction de la valeur de $x_3$.

A la fin de ces étapes, le taux de saturation du filtre est connu, sans que le taux de saturation du filtre sous test ait été augmenté. Le filtre reste donc utilisable.

Il est bien entendu que le mode de réalisation particulier qui vient d'être décrit a été donné à titre indicatif et non limitatif, et que des modifications peuvent être apportées sans que l'on s'écarte pour autant de la présente invention telle que définie dans les revendications 1-7 annexées.

**Revendications**

1. - Procédé non destructif de détermination de la capacité résiduelle d'arrêt d'un filtre adsorbant de type donné, le filtre adsorbant étant apte à adsorber un gaz cible, **caractérisé par le fait que** le procédé comprend les étapes suivantes :

   (a) choisir un gaz sonde et un gaz porteur aptes à traverser un filtre adsorbant du type donné non saturé en gaz cible sans y rester fixé, le gaz sonde ayant une isotherme d'adsorption telle qu'à une pression partielle de 0,1 atmosphère en gaz sonde, l'isotherme d'adsorption a une capacité d'adsorption inférieure à 100 $\mu$mol de gaz sonde par gramme d'adsorbant, le gaz sonde étant destiné à être mélangé au gaz porteur pour être injecté dans le filtre adsorbant du type donné, le gaz porteur ayant une isotherme d'adsorption telle qu'à une pression partielle de 0,1 atmosphère en gaz porteur, l'isotherme d'adsorption a une capacité d'adsorption inférieure à 100 $\mu$mol de gaz porteur par gramme d'adsorbant,

   (b) à température, pression et hygrométrie de fonctionnement données, choisir des paramètres d'injection de gaz sonde et de gaz porteur dans un filtre adsorbant du type donné, les paramètres d'injection comprenant, pour le gaz sonde et le gaz porteur, une durée et une courbe de débit en fonction du temps données, la concentration du gaz sonde dans le gaz porteur comportant au moins une variation brusque pendant la durée d'injection, chaque variation brusque de la concentration en gaz sonde dans les paramètres d'injection de gaz sonde **se caractérisant par** une valeur absolue de la dérivée de la concentration en gaz sonde par rapport au temps qui dépasse 100 ppmv/s, pour un filtre adsorbant du type donné, appelé filtre de référence,

   (c) injecter, aux température, pression et hygrométrie de fonctionnement données, le gaz sonde et le gaz porteur dans le filtre de référence selon les paramètres d'injection de l'étape (b) et mesurer l'évolution de la concentration en gaz sonde en fonction du temps en aval du filtre de référence pour des quantités de matière croissantes de gaz cible connues adsorbées par le filtre de référence, la dernière de ces quantités correspondant au claquage du filtre de référence, et déduire la capacité d'arrêt $m_a$ du filtre de référence comme étant la concentration massique en gaz cible envoyée pendant la durée d'injection jusqu'au claquage multipliée par le débit qui traverse le filtre multiplié par la durée mesurée entre le début de l'injection du gaz cible à concentration constante et le temps mesuré pour atteindre la concentration de claquage, pour un filtre adsorbant du type donné dont on cherche à déterminer la capacité résiduelle d'arrêt, appelé filtre sous test,

   (d) injecter, aux température, pression et hygrométrie de fonctionnement données, le gaz sonde et le gaz porteur dans le filtre sous test selon les paramètres d'injection de l'étape (b) et mesurer l'évolution de la concentration en gaz sonde en fonction du temps en aval du filtre sous test,

   (e) comparer l'évolution en fonction du temps de la concentration en gaz sonde pour le filtre sous test et pour le filtre de référence par analyse mathématique de la courbe de concentration en gaz sonde en aval du filtre en fonction du temps pour extraire une signature de la courbe représentative d'une variation brusque en amont du filtre, la signature variant avec le taux de saturation du filtre, la signature extraite de l'analyse mathématique de la courbe de concentration en gaz sonde en aval du filtre étant l'une parmi :

      - la durée de passage de 95% à 5% de la valeur maximale de concentration en gaz sonde en aval du filtre adsorbant obtenue après la variation brusque de la concentration en gaz sonde,
      - la largeur du pic de concentration en gaz sonde mesurée en aval du filtre pendant la durée de l'expérience,
      - la valeur du pic de concentration en gaz sonde mesurée en aval du filtre pendant la durée de l'expérience,
      - la période de temps entre le début de la variation brusque du gaz sonde dans le flux de gaz porteur et le début quantifiable de la variation de concentration (16) en gaz sonde en aval du filtre, et
      - l'un parmi un paramètre ou une combinaison de paramètres d'un modèle mathématique à plusieurs paramètres de la courbe de concentration en gaz sonde mesurée en aval du filtre qui, sur la plage de taux de saturation du filtre de référence, a une variation monotone et une dérivée maximale en fonction du taux de saturation,

puis comparaison de la signature entre le filtre sous test et le filtre de référence pour déterminer une valeur de taux de saturation du filtre sous test $\tau_{sft}$, et

(f) déduire la capacité résiduelle d'arrêt du filtre sous test par le calcul suivant :

$$\text{capacité résiduelle d'arrêt} = (1 - \tau_{sft})*m_a.$$

2. - Procédé selon la revendication 1, **caractérisé par le fait que** le gaz porteur est au moins un gaz parmi : de l'air, du dioxygène ($O_2$), du dihydrogène ($H_2$), du diazote ($N_2$), de l'argon (Ar), de l'hélium (He), des mélanges de gaz purs précités utilisés comme gaz étalon lors de calibration, des mélanges gazeux sur- ou sous-oxygénés tels que ceux utilisés pour la plongée profonde (exemples : trimix, héliair, héliox, surox, nitrox, triox ou hélitrox), des gaz médicaux (exemples : le protoxyde d'azote, les mélanges équimolaires d'oxygène - protoxyde d'azote (MEOPA), monoxyde d'azote (NO)), les gaz d'exploration fonctionnelle respiratoire (EFR), les mélanges respiratoires tels que hélium/oxygène et autres mélanges de gaz utilisés pour le traitement de certaines surdités (MEDI OD 93, MEDI OD 95).

3. - Procédé selon l'une des revendications 1 et 2, **caractérisé par le fait que** le gaz sonde est au moins un gaz parmi : du dioxyde de carbone ($CO_2$), protoxyde d'azote ($N_2O$), un alcane tel que méthane, éthane, propane, iso-propane, butane, pentane, ou hexane, propylène, iso-butène, un éther tel que le méthoxyméthane, des composés de la famille des gaz halogénés dont halogénoalcanes tels que Chloro-méthane ($CH_3Cl$), bromobutane, hydrofluorocarbures (HFC), chlorofluorocarbures (CFC), hydrochlorofluorocarbures (HCFC), hydrobromofluorocarbures (HBFC), bromofluorocarbures (BFC).

4. - Procédé selon l'une des revendications 1 à 3, **caractérisé par le fait que** les étapes (d) à (f) sont réalisées de manière ponctuelle, répétée ou périodique.

5. - Banc d'essai (1) comprenant :

- un régulateur de débit (3) dont l'entrée est configurée pour être reliée à une source de gaz porteur (4) et dont la sortie est configurée pour être reliée à l'arrivée de gaz (2a) d'un filtre adsorbant (2) ;
- un indicateur de température (5), un indicateur d'hygrométrie (6) et un indicateur de pression (6a) reliés à l'entrée du régulateur de débit (3) ;
- un injecteur de gaz sonde (7) dont l'entrée est configurée pour être reliée à une source de gaz sonde (8) et dont la sortie est reliée à la sortie du régulateur de débit (3) ;
- un détecteur de gaz sonde (11) configuré pour être relié à la sortie de gaz (2b) du filtre adsorbant (2) ; et
- un module de commande et de traitement de signal (13) relié au détecteur de gaz sonde (11), le régulateur de débit (3), les indicateurs de température (5), d'hygrométrie (6) et de pression (6a) l'injecteur de gaz sonde (7), le détecteur de gaz sonde (11) et le module de traitement de signal (13) dudit banc d'essai (1) étant configurés pour réaliser le procédé de détermination de capacité résiduelle selon l'une des revendications 1 à 4.

6. - Banc d'essai (1) selon la revendication 5, **caractérisé par le fait que** le détecteur de gaz sonde (11) est au moins l'un parmi : un détecteur infrarouge (IR) tel qu'un détecteur IR simple, un détecteur IR à transformée de Fourrier ou un détecteur IR non dispersif, un spectromètre de masse, un détecteur photo-acoustique, un catharomètre et un capteur électrochimique.

7. - Banc d'essai (1) selon l'une des revendications 6 et 7, **caractérisé par le fait que** l'injecteur de gaz sonde (7) est l'un parmi une vanne (7a) pilotée par un module de commande électronique (7b) apte à s'ouvrir et à se fermer en moins de 50 ms, un régulateur de débit piloté par un module de commande électronique, le régulateur de débit ayant une vanne apte à s'ouvrir et à se fermer en moins de 50 ms, et une seringue à gaz.

**Patentansprüche**

1. - Zerstörungsfreies Verfahren zur Bestimmung der Resthaltekapazität eines Adsorptionsfilters eines bestimmten Typs, wobei der Adsorptionsfilter imstande ist, ein Zielgas zu adsorbieren, **dadurch gekennzeichnet, dass** das Verfahren die folgenden Schritte umfasst:

(a) Auswählen eines Sondengases und eines Trägergases, die imstande sind, einen Adsorptionsfilter des bestimmten Typs, der nicht mit Zielgas gesättigt ist, zu durchqueren, ohne darin gebunden zu bleiben, wobei das Sondengas eine Adsorptionsisotherme aufweist, die derart ist, dass bei einem Sondengas-Partialdruck von 0,1 Atmosphäre die Adsorptionsisotherme eine Adsorptionsfähigkeit von weniger als 100 µmol Sondengas pro Gramm Adsorptionsmittel aufweist, wobei das Sondengas dazu bestimmt ist, mit dem Trägergas vermischt zu werden, um in den Adsorptionsfilter des bestimmten Typs eingeleitet zu werden, wobei das Trägergas eine Adsorptionsisotherme aufweist, die derart ist, dass bei einem Trägergas-Partialdruck von 0,1 Atmosphäre die Adsorptionsisotherme eine Adsorptionsfähigkeit von weniger als 100 µmol Trägergas pro Gramm Adsorptionsmittel aufweist,

(b) Auswählen, bei bestimmter Betriebstemperatur, -druck und -feuchtigkeit, von Parametern für die Einleitung von Sondengas und von Trägergas in ein Adsorptionsfilter des bestimmten Typs, wobei die Einleitungsparameter für das Sondengas und das Trägergas eine bestimmte Dauer und Kurve des Durchsatzes in Abhängigkeit von der Zeit umfassen, wobei die Sondengaskonzentration im Trägergas mindestens eine plötzliche Änderung während der Einleitungsdauer aufweist, wobei für einen Adsorptionsfilter des bestimmten Typs, der als Referenzfilter bezeichnet wird, jede plötzliche Änderung der Sondengaskonzentration in den Sondengaseinleitungsparametern durch einen Absolutwert der Ableitung der Sondengaskonzentration in Bezug auf die Zeit gekennzeichnet ist, der 100 ppmv/s übersteigt,

(c) Einleiten, bei bestimmter Betriebstemperatur, -druck und -feuchtigkeit, des Sondengases und des Trägergases in den Referenzfilter gemäß den Einleitungsparametern von Schritt (b) und Messen der Entwicklung der Sondengaskonzentration in Abhängigkeit von der Zeit nach dem Referenzfilter für bekannte zunehmende Zielgasmaterialmengen, die vom Referenzfilter adsorbiert werden, wobei die letzte dieser Mengen dem Durchbruch des Referenzfilters entspricht, und Ableiten der Sperrkapazität $m_a$ des Referenzfilters als die Zielgas-Massenkonzentration, die während der Einleitungsdauer bis zum Durchbruch geschickt wurde, multipliziert mit dem Durchsatz, der den Filter durchquert, multipliziert mit der zwischen dem Beginn des Einleitens des Zielgases mit konstanter Konzentration gemessenen Dauer und der zum Erreichen der Durchbruchkonzentration gemessenen Zeit, für einen Adsorptionsfilter des bestimmten Typs, dessen verbleibende Sperrkapazität bestimmt werden soll, bezeichnet als Testfilter,

(d) Einleiten, bei bestimmter Betriebstemperatur, -druck und -feuchtigkeit, des Sondengases und des Trägergases gemäß den Einleitungsparametern von Schritt (b) in den Testfilter und Messen der Entwicklung der Sondengaskonzentration in Abhängigkeit von der Zeit nach dem Testfilter,

(e) Vergleichen der Entwicklung der Sondengaskonzentration in Abhängigkeit von der Zeit für den Testfilter und für den Referenzfilter durch mathematische Analyse der Sondengaskonzentrationskurve nach dem Filter in Abhängigkeit von der Zeit, um eine Signatur der Kurve zu extrahieren, die für eine plötzliche Änderung vor dem Filter repräsentativ ist, wobei die Signatur mit dem Sättigungsgrad des Filters schwankt, wobei die aus der mathematischen Analyse der Sondengaskonzentrationskurve extrahierte Signatur nach dem Filter eine ist von:

- der Dauer des Übergangs von 95 % auf 5 % des Maximalwerts der Sondengaskonzentration nach dem Adsorptionsfilter, der nach der plötzlichen Änderung der Sondengaskonzentration erhalten wurde,
- der Breite des Peaks der Sondengaskonzentration, gemessen nach dem Filter während der Dauer des Versuchs,
- dem Wert des Peaks der Sondengaskonzentration, gemessen nach dem Filter während der Dauer des Versuchs,
- der Zeitdauer zwischen dem Beginn der plötzlichen Änderung des Sondengases im Trägergasstrom und dem quantifizierbaren Beginn der Änderung der Sondengaskonzentration (16) nach dem Filter,
- einem von einem Parameter oder einer Kombination von Parametern eines mathematischen Modells mit mehreren Parametern der Sondengaskonzentrationskurve, gemessen nach dem Filter, der über den Sättigungsgradbereich des Referenzfilters eine monotone Änderung und eine maximale Ableitung in Abhängigkeit vom Sättigungsgrad aufweist,

dann Vergleichen der Signatur zwischen dem Testfilter und dem Referenzfilter, um einen Wert des Sättigungsgrads des Testfilter $\tau_{sft}$ zu bestimmen, und

(f) Ableiten der Resthaltekapazität des Testfilters durch folgende Berechnung: Resthaltekapazität = $(1 - \tau_{sft})^* m_a$.

2. - Verfahren nach Anspruch 1, **dadurch gekennzeichnet, dass** das Trägergas mindestens eins der folgenden Gase ist: Luft, Disauerstoff ($O_2$), Dihydrogen ($H_2$), Distickstoff ($N_2$), Argon (Ar), Helium (He), Mischungen der oben genannten reinen Gase, die bei der Kalibrierung als Standardgas verwendet werden, über- oder untersauerstoffhaltige Gasmischungen, wie sie für das Tieftauchen verwendet werden (Beispiele: Trimix, Heliair, Heliox, Surox, Nitrox, Triox oder Helitrox), medizinische Gase (Beispiele: Distickstoffoxid, äquimolare Sauerstoff-Distickstoffoxid-Gemische (MEOPA), Stickstoffmonoxid (NO)), Gase für die Lungenfunktionsprüfung (EFR), Atemgasgemische wie Helium/Sauerstoff und andere Gasgemische, die für die Behandlung bestimmter Taubheitszustände verwendet werden (MEDI OD 93, MEDI OD 95).

**3.** - Verfahren nach einem der Ansprüche 1 und 2, **dadurch gekennzeichnet, dass** das Sondengas mindestens eins der folgenden Gase ist: Kohlendioxid ($CO_2$), Distickstoffoxid ($N_2O$), ein Alkan wie Methan, Ethan, Propan, Iso-Propan, Butan, Pentan oder Hexan, Propylen, Iso-Buten, ein Ether wie Methoxymethan, Verbindungen aus der Familie der halogenierten Gase, darunter Halogenalkane wie Chlormethan ($CH_3Cl$), Brombutan, Fluorkohlenwasserstoffe (HFC), Fluorchlorkohlenwasserstoffe (CFC), Chlorfluorkohlenwasserstoffe (HCFC), Hydrobromfluorkohlenwasserstoffe (HBFC), Bromfluorkohlenwasserstoffe (BFC).

**4.** - Verfahren nach einem der Ansprüche 1 bis 3, **dadurch gekennzeichnet, dass** die Schritte (d) bis (f) einmalig, wiederholt oder periodisch durchgeführt werden.

**5.** - Prüfstand (1), umfassend:

- einen Durchsatzregler (3), dessen Eingang ausgelegt ist, um mit einer Trägergasquelle (4) verbunden zu sein, und dessen Ausgang ausgelegt ist, um mit dem Gaseinlass (2a) eines Adsorptionsfilters (2) verbunden zu sein;
- eine Temperaturanzeige (5), eine Luftfeuchtigkeitsanzeige (6) und eine Druckanzeige (6a), die mit dem Eingang des Durchsatzreglers (3) verbunden sind;
- einen Sondengasinjektor (7), dessen Eingang ausgelegt ist, um mit einer Sondengasquelle (8) verbunden zu sein, und dessen Ausgang mit dem Ausgang des Durchflussreglers (3) verbunden ist;
- einen Sondengasdetektor (11), der ausgelegt ist, um mit dem Gasauslass (2b) des Adsorptionsfilters (2) verbunden zu sein; und
- ein Steuer- und Signalverarbeitungsmodul (13), das mit dem Sondengasdetektor (11) verbunden ist, wobei der Durchflussregler (3), die Temperatur- (5), Luftfeuchtigkeits- (6) und Druckanzeige (6a), der Sondengasinjektor (7), der Sondengasdetektor (11) und das Signalverarbeitungsmodul (13) des Prüfstands (1) ausgelegt sind, um das Verfahren zur Bestimmung der Restkapazität nach einem der Ansprüche 1 bis 4 durchzuführen.

**6.** - Prüfstand (1) nach Anspruch 5, **dadurch gekennzeichnet, dass** der Sondengasdetektor (11) mindestens einer ist von: einem Infrarot (IR)-Detektor wie ein einfacher IR-Detektor, einem Fourier-Transformations-IR-Detektor oder einem nicht-dispersiven IR-Detektor, einem Massenspektrometer, einem photoakustischen Detektor, einem Katharometer und einem elektrochemischen Sensor.

**7.** - Prüfstand (1) nach einem der Ansprüche 6 und 7, **dadurch gekennzeichnet, dass** der Sondengasinjektor (7) einer ist von einem Ventil (7a), das von einem elektronischen Steuermodul (7b) gesteuert wird, das in weniger als 50 ms öffnen und schließen kann, einem Durchsatzregler, der von einem elektronischen Steuermodul gesteuert wird, wobei der Durchsatzregler ein Ventil hat, das in weniger als 50 ms öffnen und schließen kann, und einer Gasspritze.

**Claims**

**1.** - A non-destructive method for determining the remaining filtration capacity of a given type of an adsorbent filter, the adsorbent filter being suitable for adsorbing a target gas, **characterized in that** the method comprises the following steps:

(a) selecting a probe gas and a carrier gas able to pass, without remaining trapped, through the given type of adsorbent filter, unsaturated with target gas therein, the probe gas having an adsorption isotherm such that at a partial pressure of 0.1 atmosphere of the probe gas, the adsorption isotherm has an adsorption capacity of less than 100 $\mu$mol of probe gas per gram of adsorbent, the probe gas being intended for being mixed with the carrier gas, for injection into the given type of adsorbent filter, the carrier gas having an adsorption isotherm such that, at a partial pressure of 0.1 atmospheres of carrier gas, the adsorption isotherm has an adsorption capacity of less than 100 $\mu$mol of carrier gas per gram of adsorbent,

(b) at a given operating temperature, pressure and hygrometry, selecting parameters for the injection of probe gas and carrier gas into an adsorbent filter of the given type, the injection parameters comprising, for the probe gas and the carrier gas, a given period and a flow-rate over time curve, the concentration of the probe gas in the carrier gas including at least one abrupt variation during the injection period, each abrupt variation in the concentration of the probe gas with regard to the injection parameters of the probe gas being **characterized by** an absolute value of the time derivative of the concentration of the probe gas, which exceeds 100 ppmv/s,

for an adsorbent filter of the given type, called reference filter,

(c) injecting, at the given operating temperature, pressure and hygrometry, the probe gas and the carrier gas into the reference filter according to the injection parameters of the step (b) and measuring, downstream of the reference filter, the evolution of the probe gas concentration as a function of time for known increasing amounts of target gas adsorbed by the reference filter, the latter of such amounts corresponding to the breakthrough of the reference filter, and deducing the shut-off capacity $m_a$ of the reference filter as being the mass concentration of target gas delivered during the injection time until the breakthrough multiplied by the flow rate through the filter multiplied by the time measured between the start of target gas injection at constant concentration and the time measured to reach the breakthrough concentration,

for an adsorbent filter of the given type for which the remaining filtration capacity is to be determined, called filter under test,

(d) injecting, at the given operating temperature, pressure and hygrometry, the probe gas and the carrier gas into the filter under test according to the injection parameters of the step (b) and measuring, downstream of the filter under test, the evolution of the probe gas concentration as a function of time,

(e) comparing the evolution of the probe gas concentration as a function of time for the filter under test and for the reference filter, by mathematical analysis of the probe gas concentration curve downstream of the filter as a function of the time to extract a signature from the curve representative of an abrupt variation upstream of the filter, the signature varying with the saturation rate of the filter, the signature extracted from the mathematical analysis of the probe gas concentration curve downstream of the filter being one of:

- the transition time from 95% to 5% of the maximum value of the probe gas concentration downstream of the adsorbent filter obtained after the abrupt variation of probe gas concentration;
- the value of the probe gas concentration peak measured downstream of the filter during the duration of the test;
- the time period between the start of the abrupt variation of the probe gas in carrier gas flow and the quantifiable start of the change of concentration (16) of probe gas downstream of the filter; and
- one amongst a parameter or a combination of parameters of a multi-parameter model of the probe gas concentration curve measured downstream of the filter which, over the range of the saturation rate of the reference filter, has a monotonic variation and a maximum derivative depending on the saturation rate,

and then comparing the signature between the filter under test and the reference filter to a saturation rate value of the filter under test $\tau_{sft}$, and

(f) deducing the remaining filtration capacity of the filter under test by the following calculation: remaining filtration capacity = $(1 - \tau_{sft})^* m_a$.

2. - The method according to claim 1, **characterized in that** the carrier gas is at least one among: air, oxygen ($O_2$), hydrogen ($H_2$), nitrogen ($N_2$), argon (Ar), helium (He), the above-mentioned pure gas mixtures used as calibration gas during calibration, over- or under-oxygenated gas mixtures such as the mixtures used for deep diving (examples: trimix, heliair, heliox, surox, nitrox, triox or helitrox), medical gases (examples: nitrous oxide, equimolar oxygen-nitrous oxide mixtures (MEOPA), nitric oxide (NO)), pulmonary function testing (EFR) gases, breathing mixtures such as helium/oxygen and other gas mixtures used for the treatment of certain hearing losses (MEDI OD 93, MEDI OD 95).

3. - The method according to one of claims 1 and 2, **characterized in that** the probe gas is at least one amongst: carbon dioxide ($CO_2$), nitrous oxide ($N_2O$), an alkane such as methane, ethane, propane, iso-propane, butane, pentane, or hexane, propylene, isobutene, an ether such as methoxymethane, compounds of the family of halogenated gases including haloalkanes such as chloromethane ($CH_3Cl$), bromobutane, hydrofluorocarbons (HFCs), chlorofluorocarbons (CFCs), hydrochlorofluorocarbons (HCFCs), hydrobromofluorocarbons (HBFCs), bromofluorocarbons (BFCs).

4. - The method according to one of claims 1 to 3, **characterized in that** the steps (d) to (f) are carried out occasionally, repeatedly or periodically.

5. - A test bench (1) comprising:

- a flow regulator (3) the inlet of which is configured for being connected to a source of carrier gas (4) and the outlet of which is configured for being connected to the gas inlet (2a) of an adsorbent filter (2);
- a temperature indicator (5), an hygrometry indicator (6) and a pressure indicator (6a) connected to the inlet of the flow regulator (3);

- a probe gas injector (7) the inlet of which is configured for being connected to a source of probe gas (8) and the outlet of which is connected to the outlet of the flow regulator (3);
- a probe gas detector (11) configured for being connected to the gas outlet (2b) of the adsorbent filter (2); and
- a signal processing and control module (13) connected to the probe gas detector (11), the flow regulator (3), the temperature (5), hygrometry (6) and pressure (6a) indicators and the probe gas injector (7), the probe gas detector (11) and the signal processing module (13) of said test bench (1) being configured for performing the method for determining residual capacity according to one of claims 1 to 4.

6. - The test bench (1) according to claim 5, **characterized in that** the probe gas detector (11) is at least one amongst: an infrared (IR) detector such as a single IR detector, a Fourier transform IR detector or a non-dispersive IR detector, a mass spectrometer, a photoacoustic detector, a katharometer, and an electrochemical detector.

7. - The test bench (1) according to one of claims 6 and 7, **characterized in that** the probe gas injector (7) is one amongst a valve (7a) controlled by an electronic control module (7b) apt to open and close in less than 50 ms, a flow regulator controlled by an electronic control module, the flow regulator having a valve apt to open and close in less than 50 ms, and a gas syringe.

Fig.1

Fig.2

Courbes expérimentales et modélisées de la concentration de $CO_2$ en aval
d'un filtre adsorbant en fonction du temps

Fig.3

Variation du paramètre x3 en fonction du taux de saturation d'un filtre

Fig. 4

Concentration de gaz sonde en amont du filtre. Exemple de temps caractéristiques pour une injection de 100ml de chlorure de méthyle à pression atmosphérique, dans un filtre, gaz porteur : air à 20 L.min⁻¹

Concentration de gaz sonde en aval du filtre. Exemple de temps caractéristiques pour le chlorure de méthyle dans un filtre dans les conditions expérimentales précisées ci-dessus

concentration

5s     1min                                              30min     temps

Fig. 5a

Concentration de gaz sonde en amont du filtre. Exemple de temps caractéristiques pour le CO₂ injecté à 2 bars, dans un filtre, gaz porteur : air à 20 L.min⁻¹

Concentration de gaz sonde en aval du filtre. Exemple de temps caractéristiques pour le CO₂ dans un filtre, dans les conditions expérimentales précisées ci-dessus.

Concentration

1 s     10 s                                    1 min     temps

Fig. 5b

Concentration

Concentration de gaz sonde en amont du filtre
Concentration de gaz sonde en aval du filtre

temps

Fig. 6a

Fig. 6b

**Un exemple classique de courbe de percée d'un filtre saturé petit à petit par un gaz cible injecté à concentration constante**

Lit d'adsorbant état initial

Lit d'adsorbant saturé

Produits cibles ou polluants

Flux dynamique dans le filtre avec :
$C_0$ Concentration en **gaz cible** constante en amont en entrée du filtre
Q Débit continu de gaz porteur dans le filtre
C Concentration mesurée en **gaz cible** en aval du filtre
$C_c$ **Concentration de claquage** correspondant au claquage du filtre
$t_{eff}$ **temps d'efficacité** du filtre défini tel que $C = C_c$

Fig.7

Explication détaillée de l'étape c permettant la constitution des abaques du procédé décrit dans l'invention.

Fig.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009055511 A1

**Littérature non-brevet citée dans la description**

- **DAS et al.** *Carbon*, 2004, vol. 42, 2949-2962
- **A. D. MCNAUGHT** ; **A. WILKINSON**. IUPAC. Compendium of Chemical Terminology. Blackwell Scientific Publications, 1997
- **BOLLINI et al.** Dynamique d'absorption de CO2 sur des adsorbants amine. 1. Impact sur les effets de chaleur. *Ind. Eng. Chem. Res.*, 2012, vol. 51 (46), 15145-15152
- **WAHIDUZZAMAN et al.** Traitement et performances d'une membrane nanofibreuse PAN à charge MOF. *Journal of Materials Engineering and Performance*, 2016, vol. 25, 1276-1283